# EUROPEAN PATENT APPLICATION

(11) **EP 4 686 215 A1**
(43) Date of publication of application: **28.01.2026**
(21) Application number: 24774436.0
(22) Date of filing: 26.01.2024
(51) Int. Cl.: H04N 25/589, H04N 25/78

(54) **SOLID-STATE IMAGING ELEMENT, IMAGING DEVICE, AND METHOD FOR CONTROLLING SOLID-STATE IMAGING ELEMENT**

(30) Priority: 22.03.2023 JP 2023045035
(71) Applicant: Sony Semiconductor Solutions Corporation, Atsugi-shi, Kanagawa 243-0014 (JP)
(72) Inventor: UMEDA, Kengo, Atsugi-shi, Kanagawa 243-0014 (JP); TATSUZAWA, Yukiyasu, Atsugi-shi, Kanagawa 243-0014 (JP)
(74) Representative: MFG Patentanwälte Meyer-Wildhagen Meggle-Freund Gerhard PartG mbB
(86) International application number: PCT/JP2024/002345
(87) International publication number: WO 2024/195290

(57) **Abstract**

To suppress an increase in circuit scale in a solid-state imaging element that performs AD conversion on a plurality of analog signals.

A solid-state imaging element includes a pixel, an analog-to-digital converter, and a logic circuit. In this solid-state imaging element, a pixel sequentially generates a plurality of analog signals having different exposure times. In addition, the analog-to-digital converter sequentially converts each of the plurality of analog signals into a digital signal. In addition, the logic circuit controls the resolution of the analog-to-digital converter according to the exposure time.

## Description

### TECHNICAL FIELD

The present technology relates to a solid-state imaging element. Specifically, the present technology relates to a solid-state imaging element that performs analog to digital (AD) conversion, an imaging device, and a control method of a solid-state imaging element.

### BACKGROUND ART

Conventionally, in an imaging device, an image synthesis technology called high dynamic range (HDR) synthesis is used in order to realize a dynamic range wider than usual. For example, there has been proposed an imaging device including two systems of AD converters, in which one of the AD converters AD-converts an analog signal having a longer exposure time, and the other AD-converts an analog signal having a shorter exposure time (see, for example, Patent Document 1). In this imaging device, the number of gradations of the AD converter for each system is individually controlled.

### CITATION LIST

### PATENT DOCUMENT

Patent Document 1: Japanese Patent Application Laid-Open No. 2012-222529

### SUMMARY OF THE INVENTION

### PROBLEMS TO BE SOLVED BY THE INVENTION

In the above-described conventional technique, image quality is improved by controlling the number of gradations of each of the two systems of AD converters. However, since two systems of AD converters are required in the above-described imaging device, there is a problem that the circuit scale is increased as compared with the case of one system.

The present technology has been made in view of such a situation, and an object thereof is to suppress an increase in circuit scale in a solid-state imaging element that performs AD conversion on a plurality of analog signals.

### SOLUTIONS TO PROBLEMS

The present technology has been made to solve the above-described problems, and a first aspect thereof is a solid-state imaging element including: a pixel that sequentially generates a plurality of analog signals having different exposure times; an analog-to-digital converter that sequentially converts each of the plurality of analog signals into a digital signal; and a logic circuit that controls resolution of the analog-to-digital converter according to an exposure time, and a control method thereof. This brings about an effect of suppressing an increase in circuit scale.

Furthermore, in the first aspect, a compression section that compresses the digital signal may be further included, and the logic circuit may control the compression section to compress the digital signal corresponding to at least one analog signal among the plurality of analog signals. As a result, there is an effect that the processing load of the processor in the subsequent stage is reduced.

Furthermore, in the first aspect, the logic circuit may control the resolution according to an exposure time in a case where a photometric amount is larger than a predetermined value, and control the resolution to a predetermined value in a case where the photometric amount is less than the predetermined value. As a result, it is possible to reduce power consumption while ensuring the dynamic range.

Furthermore, in the first aspect, the logic circuit may control the resolution according to power consumption of a circuit that processes the digital signal. This brings about an effect of suppressing an increase in power consumption.

Furthermore, in the first aspect, a temperature sensor that measures temperature may be further included, and the logic circuit may control the resolution according to the temperature. This brings about an effect of suppressing a temperature rise.

Furthermore, in the first aspect, the pixel may include a first pixel and a second pixel that share a floating diffusion layer, and the logic circuit may add analog signals of the first pixel and the second pixel. This brings about an effect of reducing power consumption.

Furthermore, in the first aspect, the plurality of analog signals may include a long-time exposure signal which is an analog signal having a longest exposure time, a short-time exposure signal which is an analog signal having a shortest exposure time, and an intermediate-time exposure signal which is an analog signal having an exposure time different from the long-time exposure signal and the short-time exposure signal. This brings about an effect of expanding the dynamic range.

Furthermore, in the first aspect, the logic circuit may control the pixel to generate the short-time exposure signal in a case where a live view mode for repeatedly generating image data synchronized with a vertical synchronization signal is set, and may generate the long-time exposure signal in a case where a still image capturing mode for capturing a still image is set. This brings about an effect of reducing power consumption.

Furthermore, in the first aspect, the pixel may include adjacent first and second pixels, the plurality of analog signals may include a long-time exposure signal which is an analog signal having a longest exposure time, a short-time exposure signal which is an analog signal having a shortest exposure time, and an intermediate-time exposure signal which is an analog signal having an exposure time different from the long-time exposure signal and the short-time exposure signal, and the logic circuit may cause the first pixel to sequentially generate the long-time exposure signal and the intermediate-time exposure signal, and cause the second pixel to sequentially generate the intermediate-time exposure signal and the short-time exposure signal. This brings about an effect of reducing power consumption.

Furthermore, in the first aspect, the logic circuit may control the resolution when converting an analog signal generated by the solid-state imaging element to a value different from a resolution when converting an analog signal generated by a solid-state imaging element different from the solid-state imaging element. This brings about an effect of reducing power consumption.

Furthermore, a second aspect of the present technology is a solid-state imaging element including: a pixel that sequentially generates a plurality of analog signals having different exposure times; an analog-to-digital converter that sequentially converts each of the plurality of analog signals into a digital signal in synchronization with a predetermined clock signal; and a logic circuit that controls a frequency of the clock signal according to an exposure time. This brings about an effect of suppressing an increase in power consumption of the circuit.

Furthermore, in the second aspect, the logic circuit may control the frequency according to an exposure time in a case where a photometric amount is larger than a predetermined value, and control the frequency to a predetermined value in a case where the photometric amount is less than the predetermined value. As a result, it is possible to reduce power consumption while ensuring the dynamic range.

Furthermore, in the second aspect, the logic circuit may control the frequency according to power consumption of a circuit that processes the digital signal. This brings about an effect of suppressing an increase in power consumption.

Furthermore, in the second aspect, a temperature sensor that measures temperature may be further included, and the logic circuit may control the frequency according to the temperature. This brings about an effect of suppressing an increase in temperature.

Furthermore, in the second aspect, the pixel may include a first pixel and a second pixel that share a floating diffusion layer, and the logic circuit may add respective analog signals of the first and first pixels. This brings about an effect of reducing power consumption.

Furthermore, in the second aspect, the plurality of analog signals may include a long-time exposure signal which is an analog signal having a longest exposure time, a short-time exposure signal which is an analog signal having a shortest exposure time, and an intermediate-time exposure signal which is an analog signal having an exposure time different from the long-time exposure signal and the short-time exposure signal. This brings about an effect of expanding the dynamic range.

Furthermore, in the second aspect, the logic circuit may control the pixel to generate the short-time exposure signal in a case where a live view mode for repeatedly generating image data synchronized with a vertical synchronization signal is set, and may generate the long-time exposure signal in a case where a still image capturing mode for capturing a still image is set. This brings about an effect of reducing power consumption.

Furthermore, in the second aspect, the pixel may include adjacent first and second pixels, the plurality of analog signals may include a long-time exposure signal which is an analog signal having a longest exposure time, a short-time exposure signal which is an analog signal having a shortest exposure time, and an intermediate-time exposure signal which is an analog signal having an exposure time different from the long-time exposure signal and the short-time exposure signal, and the logic circuit may cause the first pixel to sequentially generate the long-time exposure signal and the intermediate-time exposure signal, and cause the second pixel to sequentially generate the intermediate-time exposure signal and the short-time exposure signal. This brings about an effect of reducing power consumption.

Furthermore, in the second aspect, the frequency at a time of converting an analog signal generated by the solid-state imaging element may be controlled to a value different from a frequency at a time of converting an analog signal generated by a solid-state imaging element outside the solid-state imaging element. This brings about an effect of reducing power consumption.

Furthermore, a third aspect of the present technology is a solid-state imaging element including: a plurality of pixels; an analog-to-digital converter that sequentially converts a first analog signal generated by a pixel in a region of interest among the plurality of pixels and a second analog signal generated by a pixel in a region not corresponding to the region of interest among the plurality of pixels into digital signals; and a logic circuit that controls resolution at a time of converting the first analog signal to a higher value than that at a time of converting the second analog signal. This brings an effect of reducing noise in the region of interest.

Furthermore, in the third aspect, the plurality of pixels may include first and second pixels that share a floating diffusion layer, and the logic circuit may add respective analog signals of the first and second pixels in a case where the first and second pixels are pixels in a region not corresponding to the region of interest. This brings about an effect that the power in the region of non-interest can be reduced while maintaining the resolution of the region of interest.

Furthermore, a fourth aspect of the present technology is an imaging device including: a pixel that sequentially generates a plurality of analog signals having different exposure times; an analog-to-digital converter that sequentially converts each of the plurality of analog signals into a digital signal; a logic circuit that controls resolution of the analog-to-digital converter according to an exposure time; and an image processing section that processes image data in which the digital signals are arranged. This brings about an effect of suppressing an increase in the circuit scale of the imaging device.

### BRIEF DESCRIPTION OF DRAWINGS

Fig. 1 is a block diagram illustrating a configuration example of an imaging device according to a first embodiment of the present technology.
Fig. 2 is a block diagram illustrating a configuration example of a solid-state imaging element according to the first embodiment of the present technology.
Fig. 3 is a circuit diagram illustrating a configuration example of a pixel according to the first embodiment of the present technology.
Fig. 4 is a block diagram illustrating a configuration example of a column signal processing section according to the first embodiment of the present technology.
Fig. 5 is a timing chart illustrating an example of exposure control according to the first embodiment of the present technology.
Fig. 6 is a diagram illustrating an example of a waveform of a ramp signal according to the first embodiment of the present technology.
Fig. 7 is a diagram illustrating a setting example of resolution according to the first embodiment of the present technology.
Fig. 8 is a diagram illustrating an example of dark noise and a dynamic range in each of the first embodiment and the comparative example of the present technology.
Fig. 9 is a diagram illustrating an example of power consumption in each of the first embodiment and the comparative example of the present technology.
Fig. 10 is a flowchart illustrating an example of operation of the imaging device according to the first embodiment of the present technology.
Fig. 11 is a diagram illustrating an example of a data format of transmission data according to the first embodiment of the present technology.
Fig. 12 is a diagram illustrating a setting example of a frequency according to a second embodiment of the present technology.
Fig. 13 is a diagram illustrating an example of a waveform of a ramp signal according to the second embodiment of the present technology.
Fig. 14 is a diagram illustrating an example of dark noise and power consumption in each of the second embodiment and the comparative example of the present technology.
Fig. 15 is a block diagram illustrating a configuration example of a solid-state imaging element according to a third embodiment of the present technology.
Fig. 16 is a block diagram illustrating a configuration example of an imaging device according to a fourth embodiment of the present technology.
Fig. 17 is a diagram illustrating a setting example of resolution according to the fourth embodiment of the present technology.
Fig. 18 is a block diagram illustrating a configuration example of an imaging device according to a fifth embodiment of the present technology.
Fig. 19 is a diagram illustrating a setting example of resolution according to the fifth embodiment of the present technology.
Fig. 20 is a block diagram illustrating a configuration example of a solid-state imaging element according to a sixth embodiment of the present technology.
Fig. 21 is a diagram illustrating a setting example of resolution according to the sixth embodiment of the present technology.
Fig. 22 is a diagram illustrating an example of an array of pixels according to a seventh embodiment of the present technology.
Fig. 23 is a circuit diagram illustrating a configuration example of a shared block according to the seventh embodiment of the present technology.
Fig. 24 is a diagram illustrating a setting example of resolution according to the seventh embodiment of the present technology.
Fig. 25 is a diagram illustrating an example of settable resolution according to the seventh embodiment of the present technology.
Fig. 26 is a diagram illustrating a setting example of a region in an eighth embodiment of the present technology.
Fig. 27 is a timing chart illustrating an example of exposure and read control according to the eighth embodiment of the present technology.
Fig. 28 is a diagram illustrating a setting example of resolution according to the eighth embodiment of the present technology.
Fig. 29 is a diagram illustrating a setting example of a region in a ninth embodiment of the present technology.
Fig. 30 is a diagram illustrating a setting example of resolution and the like according to the ninth embodiment of the present technology.
Fig. 31 is a timing chart illustrating an example of exposure control according to a 10th embodiment of the present technology.
Fig. 32 is a diagram illustrating an example of a waveform of a ramp signal according to the 10th embodiment of the present technology.
Fig. 33 is a block diagram illustrating a configuration example of an imaging device according to an 11th embodiment of the present technology.
Fig. 34 is a flowchart illustrating an example of operation of the imaging device according to the 11th embodiment of the present technology.
Fig. 35 is a timing chart illustrating an example of exposure control according to the 11th embodiment of the present technology.
Fig. 36 is a diagram illustrating an example of an exposure time for each pixel according to a 12th embodiment of the present technology.
Fig. 37 is a timing chart illustrating an example of exposure control according to the 12th embodiment of the present technology.
Fig. 38 is a block diagram illustrating a configuration example of an imaging device according to a 13th embodiment of the present technology.
Fig. 39 is a diagram illustrating a setting example of resolution according to the 13th embodiment of the present technology.
Fig. 40 is a block diagram depicting a schematic configuration example of a vehicle control system.
Fig. 41 is an explanatory diagram depicting an example of an installation position of an imaging section.

### MODE FOR CARRYING OUT THE INVENTION

Hereinafter, modes for carrying out the present technology (hereinafter referred to as embodiments) will be described. The description will be given in the following order.
1. First Embodiment (Example of Controlling Resolution According to Exposure Time)
2. Second Embodiment (Example of Controlling Frequency According to Exposure Time)
3. Third Embodiment (Example of Compressing Pixel Data by Controlling Resolution According to Exposure Time)
4. Fourth Embodiment (Example of Controlling Resolution According to Brightness and Exposure Time)
5. Fifth Embodiment (Example of Controlling Resolution According to Power Consumption and Exposure Time)
6. Sixth Embodiment (Example of Controlling Resolution According to Temperature and Exposure Time)
7. Seventh Embodiment (Example of Controlling Resolution on Basis of Whether or Not Pixel Addition Is Performed and Exposure Time)
8. Eighth Embodiment (Example of Increasing Resolution of Region of Interest)
9. Ninth Embodiment (Example of Increasing Resolution of Region of Interest and Adding Pixels Outside Region of Interest)
10. 10th Embodiment (Example in Which Frequency Is Controlled According to Exposure Time and Three Pieces Are Synthesized)
11. 11th Embodiment (Example of Controlling Frequency on Basis of Whether or Not Live View Mode Is Set and Exposure Time)
12. 12th Embodiment (Example of Controlling Resolution According to Exposure Time and Exposing Two Pixels at Different Exposure Times)
13. 13th Embodiment (Example in Which Resolution Is Controlled According to Exposure Time and Resolution of Each of Two Eyes Is Set to Different Value)
14. Application Example to Mobile Body

### <1. First Embodiment>

### [Configuration Example of Imaging Device]

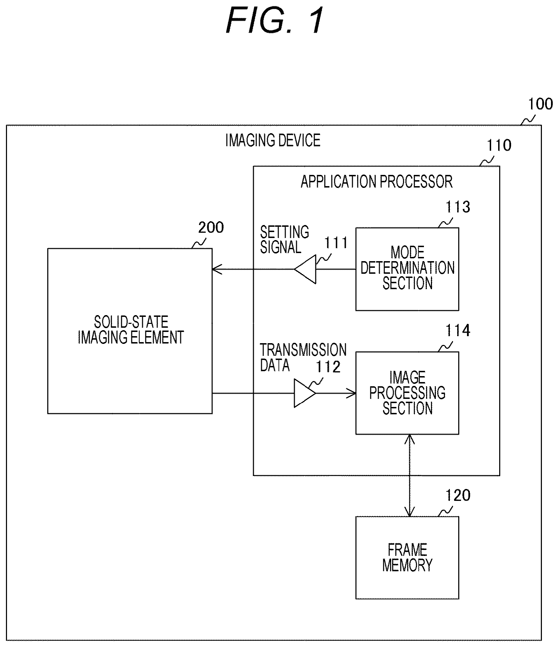

Fig. 1 is a block diagram illustrating a configuration example of an imaging device 100 according to an embodiment of the present technology. The imaging device 100 is a device for imaging image data (in other words, frame), and includes a solid-state imaging element 200, an application processor 110, and a frame memory 120. As the imaging device 100, a digital camera and various electronic devices (such as a smartphone and a personal computer) having an imaging function are assumed.

The solid-state imaging element 200 generates a frame by photoelectric conversion. The solid-state imaging element 200 generates a frame under the control of the application processor 110 and transmits transmission data including the frame to the application processor 110.

The application processor 110 includes a transmission section 111, a reception section 112, a mode determination section 113, and an image processing section 114.

The transmission section 111 transmits the setting signal from the mode determination section 113 to the solid-state imaging element 200. For example, an inter-integrated circuit (I2C) standard is used as a communication standard when a setting signal is transmitted.

The reception section 112 receives transmission data including a frame. For example, a mobile industry processor interface (MIPI) standard is used as a communication standard when the transmission data is transmitted.

The mode determination section 113 determines a mode to be set among a plurality of modes regarding HDR synthesis processing executed by the image processing section 114. Here, the HDR synthesis processing is processing of synthesizing a plurality of frames having different exposure times to expand the dynamic range. Hereinafter, each of the plurality of frames to be synthesized in the HDR synthesis processing is referred to as a "subframe". In addition, the synthesized frame is referred to as a "synthesis frame".

Furthermore, the resolution of an analog to digital converter (ADC) in the solid-state imaging element 200 is variable, and when the HDR synthesis processing is executed, the mode determination section 113 can set a plurality of modes having different resolutions for each subframe. Hereinafter, a mode in which the resolution of the ADC is R (R is an integer) bits is referred to as an "R bit mode". The mode determination section 113 generates a setting signal instructing a mode to be set for each subframe, and transmits the setting signal to the solid-state imaging element 200 via the transmission section 111.

Note that, in addition to the mode, various information is stored in the setting signal as necessary. For example, the exposure time and the setting value of the analog gain for the analog signal can be stored in the setting signal. Furthermore, the transmission section 111 can transmit various signals such as a control signal for instructing start and end of imaging, in addition to the setting signal.

The image processing section 114 performs various types of image processing on the frame in the transmission data using the frame memory 120. This image processing includes HDR synthesis processing.

Note that the solid-state imaging element 200 can also execute at least part of the processing performed by the application processor 110. For example, the processing of the mode determination section 113 can be executed by a logic circuit (not illustrated) in the solid-state imaging element 200, and the processing of the image processing section 114 can be executed by the application processor 110.

### [Configuration Example of Solid-State Imaging Element]

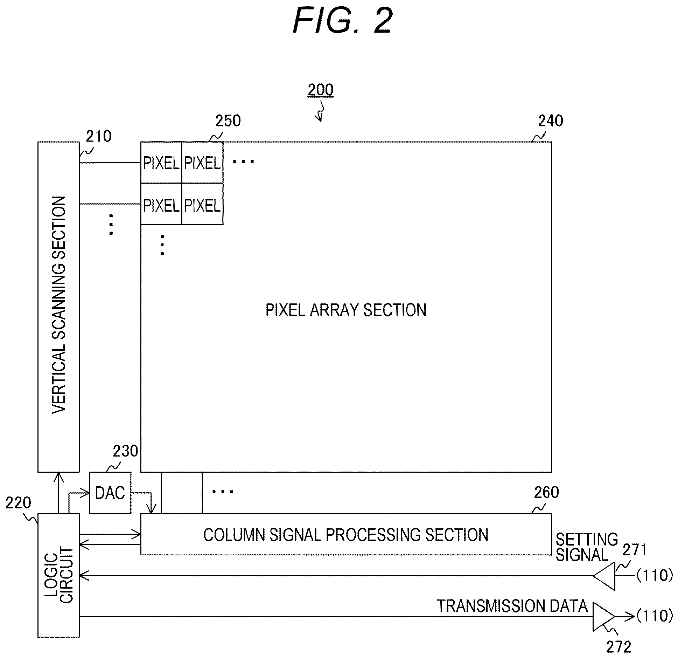

Fig. 2 is a block diagram illustrating a configuration example of the solid-state imaging element 200 according to the first embodiment of the present technology. The solid-state imaging element 200 includes a vertical scanning section 210, a logic circuit 220, a digital to analog converter (DAC) 230, a pixel array section 240, a column signal processing section 260, a reception section 271, and a transmission section 272. In the pixel array section 240, a plurality of pixels 250 is arranged in a two-dimensional lattice pattern.

The vertical scanning section 210 sequentially selects and drives rows in the pixel array section 240. Each of the pixels 250 generates an analog signal by photoelectric conversion. These pixels 250 supply the generated analog signal to the column signal processing section 260 as a pixel signal. Furthermore, in a case where the HDR synthesis processing is performed, each of the pixels 250 sequentially generates a plurality of pixel signals having different exposure times.

The logic circuit 220 controls each of the vertical scanning section 210, the DAC 230, and the column signal processing section 260. The logic circuit 220 receives a setting signal from the application processor 110 via the reception section 271.

The logic circuit 220 controls the vertical scanning section 210, the DAC 230, and the column signal processing section 260 according to the setting signal to generate a plurality of subframes having different exposure times. At this time, the logic circuit 220 controls the resolution of the ADC (not illustrated) in the column signal processing section 260 to a higher value as the exposure time is longer.

In addition, the logic circuit 220 receives the subframe from the column signal processing section 260 and generates transmission data by adding various types of embedding information. Then, the logic circuit 220 transmits the transmission data to the application processor 110 via the transmission section 272.

The DAC 230 generates a ramp signal and supplies the ramp signal to the column signal processing section 260. The column signal processing section 260 converts an analog pixel signal into a digital signal for each column. The column signal processing section 260 supplies the subframe in which the digital signals are arranged to the logic circuit 220.

The reception section 271 receives a setting signal from the application processor 110 and supplies the setting signal to the logic circuit 220. The transmission section 272 transmits the transmission data from the logic circuit 220 to the application processor 110.

### [Configuration Example of Pixel]

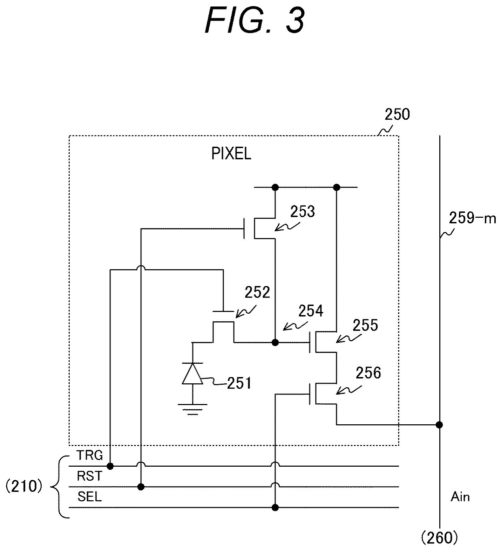

Fig. 3 is a circuit diagram illustrating a configuration example of the pixel 250 according to the first embodiment of the present technology. The pixel 250 includes a photoelectric conversion element 251, a transfer transistor 252, a reset transistor 253, a floating diffusion layer 254, an amplification transistor 255, and a selection transistor 256. Furthermore, in the pixel array section 240, vertical signal lines are wired for each column along the vertical direction. Assume that a vertical signal line of an m-th (m is an integer) column is 259-m.

The photoelectric conversion element 251 photoelectrically converts incident light to generate a charge. The transfer transistor 252 transfers a charge from the photoelectric conversion element 251 to the floating diffusion layer 254 in accordance with a drive signal TRG from the vertical scanning section 210.

The reset transistor 253 extracts and initializes charges from the floating diffusion layer 254 in accordance with a drive signal RST from the vertical scanning section 210.

The floating diffusion layer 254 accumulates charges and generates a voltage corresponding to the charge amount. The amplification transistor 255 amplifies the voltage of the floating diffusion layer 254.

The selection transistor 256 outputs an amplified voltage signal as a pixel signal Ain to the column signal processing section 260 via a vertical signal line 259-m in accordance with a drive signal SEL from the vertical scanning section 210.

Note that the circuit configuration of the pixel 250 is not limited to that illustrated in the drawing as long as the pixel signal can be generated.

### [Configuration Example of Column Signal Processing Section]

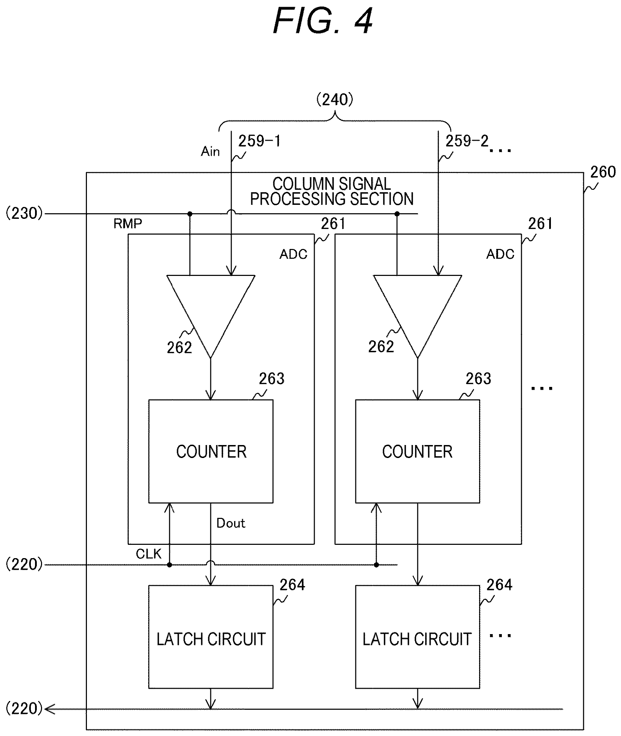

Fig. 4 is a block diagram illustrating a configuration example of the column signal processing section 260 according to the first embodiment of the present technology. The column signal processing section 260 includes an ADC 261 and a latch circuit 264 for each column. As the ADC 261, for example, a single-slope ADC including a comparator 262 and a counter 263 is used.

The comparator 262 compares the pixel signal Ain from the vertical signal line 259-m of the corresponding column with the ramp signal RMP from the DAC 230. The comparator 262 supplies a comparison result to the counter 263. The counter 263 counts a count value in synchronization with the clock signal CLK over a period until the comparison result is inverted. The counter 263 supplies a digital signal Dout indicating the count value to the latch circuit 264.

The latch circuit 264 holds the digital signal Dout from the ADC 261 of the corresponding column. The frame in which the digital signals Dout are arranged is supplied to the logic circuit 220.

As illustrated in the drawing, in a case where the single-slope ADC is used, the resolution can be changed by at least one of the control of the frequency of the clock signal CLK or the control of the slope of the ramp signal RMP. The higher the frequency of the clock signal CLK, the higher the resolution. Further, as the slope of the ramp signal RMP becomes gentler, the resolution becomes higher. The logic circuit 220 controls at least one of the frequency of the clock signal CLK or the slope of the ramp signal RMP according to the mode instructed by the setting signal.

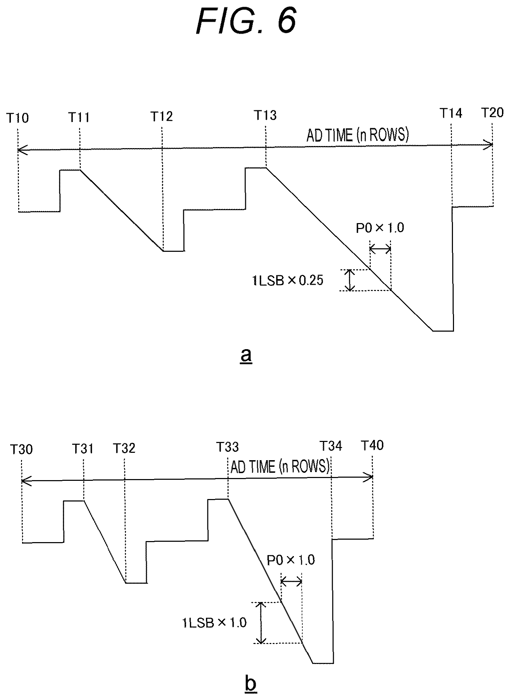

Furthermore, in the single-slope ADC, the analog gain can be increased as the slope of the ramp signal is made gentler. Note that, as illustrated in Fig. 6 of WO 2021/112058 A, a circuit in which the capacitance ratio between the vertical signal line side and the ramp side is variable is arranged in a comparator, and the analog gain can be controlled by switching the capacitance ratio.

Furthermore, the column signal processing section 260 can perform correlated double sampling (CDS) processing of obtaining a difference between the pixel signal at the time of initialization as a reset level and the pixel signal at the time of charge transfer as a signal level. For example, the ADC 261 performs down counting at the time of conversion of the reset level and performs up counting at the time of conversion of the signal level, whereby the CDS processing can be realized. Alternatively, a circuit that performs digital CDS processing may be added to the subsequent stage of the ADC 261.

In addition, as the ADC 261, an ADC other than the single-slope ADC can also be used. For example, a delta sigma type, a successive approximation type, a flash type, a pipeline type ADC, or the like can be used. In the delta sigma type ADC, the resolution can be changed by controlling the clock frequency of the counter and the AD conversion time. Furthermore, in the successive approximation type ADC, the resolution can be changed by controlling the number of times of comparison. In the flash type ADC, the resolution can be changed by placing the unnecessary comparator in the standby state. In the pipelined type ADC, the resolution can be changed by controlling the number of stages to be used.

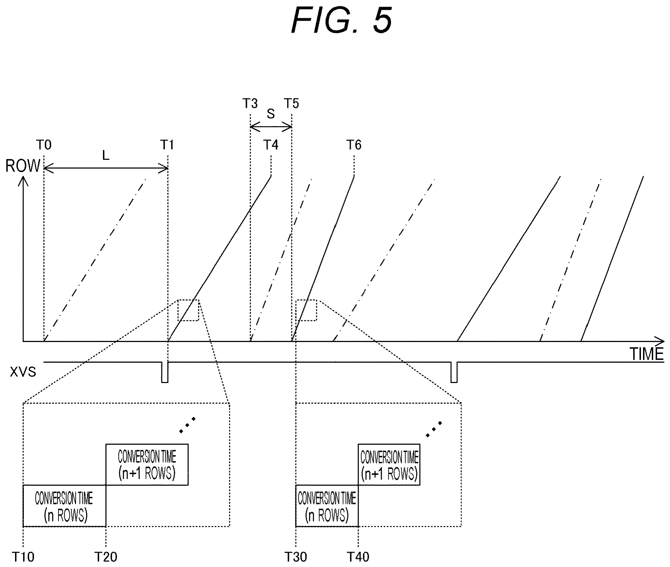

Fig. 5 is a timing chart illustrating an example of exposure control according to the first embodiment of the present technology. It is assumed that a vertical synchronization signal XVS indicating imaging timing is input to the solid-state imaging element 200. In addition, the number of subframes to be synthesized is two.

The vertical scanning section 210 selects the first row at timing T0 before falling of the vertical synchronization signal XVS and starts exposure of the row. Subsequently, the vertical scanning section 210 sequentially starts exposure of the second and subsequent rows. A dashed-dotted line in the drawing indicates exposure start timing for each row.

Then, at the rising timing T1 of the vertical synchronization signal XVS, the vertical scanning section 210 selects the first row and ends the exposure of the row, and the ADC 261 of each column performs AD conversion on the pixel signal of the row. Subsequently, the vertical scanning section 210 sequentially ends the exposure of the second and subsequent rows, and the ADC 261 of each column performs AD conversion on the pixel signal of the row. It is assumed that the AD conversion of the last row is completed at timing T4. In the drawing, a solid line indicates the start timing of AD conversion for each row. A first subframe is generated by the AD conversion. In addition, the time from the timing T0 to T1 corresponds to the exposure time L of the subframe.

Furthermore, the vertical scanning section 210 starts exposure of the first row at timing T3. Subsequently, the vertical scanning section 210 sequentially starts exposure of the second and subsequent rows. Then, at timing T5 after timing T4, the vertical scanning section 210 ends the exposure of the first row, and the ADC 261 of each column performs AD conversion on the pixel signal of the row. Subsequently, the vertical scanning section 210 sequentially ends the exposure of the second and subsequent rows, and the ADC 261 of each column performs AD conversion on the pixel signal of the row. It is assumed that the AD conversion of the last row is completed at timing T6. The second subframe is generated by the AD conversion. In addition, the time from the timing T3 to T5 corresponds to the exposure time S of the subframe. The exposure time S is set to a time shorter than the exposure time L.

Hereinafter, a pixel signal having a longer exposure time is referred to as a "long-time exposure signal", and a pixel signal having a shorter exposure time is referred to as a "short-time exposure signal".

Furthermore, the AD conversion of the n-th row long-time exposure signal is executed from timing T10 to timing T20. On the other hand, the AD conversion of the n-th row short-time exposure signal is executed from timing T30 to timing T40. As described above, the longer the exposure time, the higher the resolution is set. Therefore, when the clock frequency of the counter is constant, the AD conversion time of the long-time exposure signal (time from timing T10 to timing T20) is longer than the AD conversion time of the short-time exposure signal (time from timing T30 to timing T40).

Fig. 6 is a diagram illustrating an example of a waveform of a ramp signal according to the first embodiment of the present technology. a of the drawing indicates a waveform of a ramp signal at the time of AD conversion of the long-time exposure signal, and b of the drawing indicates a waveform of a ramp signal at the time of AD conversion of the short-time exposure signal.

As exemplified in a of the drawing, the level of the ramp signal decreases over a period from timing T11 to timing T12, and the reset level of the long-time exposure signal is AD-converted within this period. Then, the level of the ramp signal drops over a period from timing T13 to timing T14, and the signal level of the long-time exposure signal is AD-converted within this period.

As exemplified in b of the drawing, the level of the ramp signal drops over a period from timing T31 to timing T32, and the reset level of the short-time exposure signal is AD-converted within this period. Then, the level of the ramp signal drops over a period from timing T33 to timing T34, and the signal level of the short-time exposure signal is AD-converted within this period.

Further, as exemplified in a and b of the drawing, the slope of the ramp signal corresponding to the long-time exposure signal is set to be gentler than the slope of the ramp signal corresponding to the short-time exposure signal.

In the drawing, the predetermined reference cycle is P0. As exemplified in a of the drawing, in the ramp signal corresponding to the long-time exposure signal, the change amount within the reference cycle is 0.25 times the level corresponding to 1 least significant bit (LSB) .

On the other hand, as exemplified in b of the drawing, in the ramp signal corresponding to the short-time exposure signal, the change amount within the reference cycle is 1.0 times the level corresponding to 1LSB. As a result, the slope of the ramp signal corresponding to the short-time exposure signal is four times the slope of the ramp signal corresponding to the long-time exposure signal.

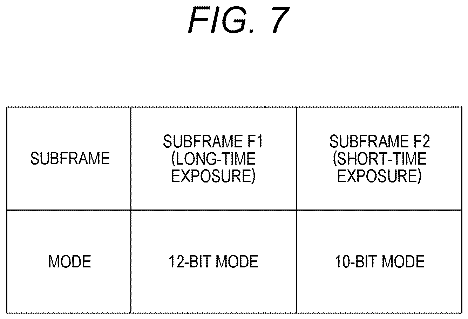

Fig. 7 is a diagram illustrating a setting example of resolution according to the first embodiment of the present technology. At the time of AD conversion of the subframe F1 of long-time exposure, for example, a 12-bit mode with a resolution of 12 bits is set. On the other hand, at the time of AD conversion of the short-time exposure subframe F2, for example, a 10-bit mode with a resolution of 10 bits is set. Note that the combination of the resolutions of the subframes is not limited to 12 bits and 10 bits.

A long-time exposure signal in which dark noise is important for the purpose of acquiring a dark image can be reduced in noise by performing AD conversion with 12 bits. On the other hand, a short-time exposure signal in which dark noise is not important for the purpose of acquiring a bright image can be reduced in power by performing AD conversion with 10 bits. This makes it possible to achieve both noise reduction and power reduction.

At the time of conversion with 12 bits, since the ramp signal is gentle as illustrated in a of Fig. 6, the noise bandwidth of the comparator 262 in the ADC 261 is narrowed, and pixel noise and circuit noise are reduced. Furthermore, since the level per 1LSB is reduced to 0.25 times of that of 10 bits, quantization noise can also be reduced, which brings a great effect on noise reduction. However, since the AD conversion time becomes long, the blanking time during which the analog circuit in the ADC 261 can be brought into the standby state becomes short, and the power consumption increases.

Therefore, the ADC 261 performs AD conversion with 10 bits for a short-time exposure signal in which light shot noise is dominant and dark noise is not important. At this time, since the ramp signal becomes steep as illustrated in b of Fig. 6, a large effect is obtained in the power reduction by shortening the AD conversion time and securing a long blanking period.

Here, a configuration in which both the resolutions of the long-time exposure signal and the short-time exposure signal are set to 10 bits is assumed as Comparative Example 1. In addition, a configuration in which both the resolutions of the long-time exposure signal and the short-time exposure signal are set to 12 bits is assumed as Comparative Example 2.

The dark noise, the dynamic range, and the power consumption of each of these comparative examples and the first embodiment are compared.

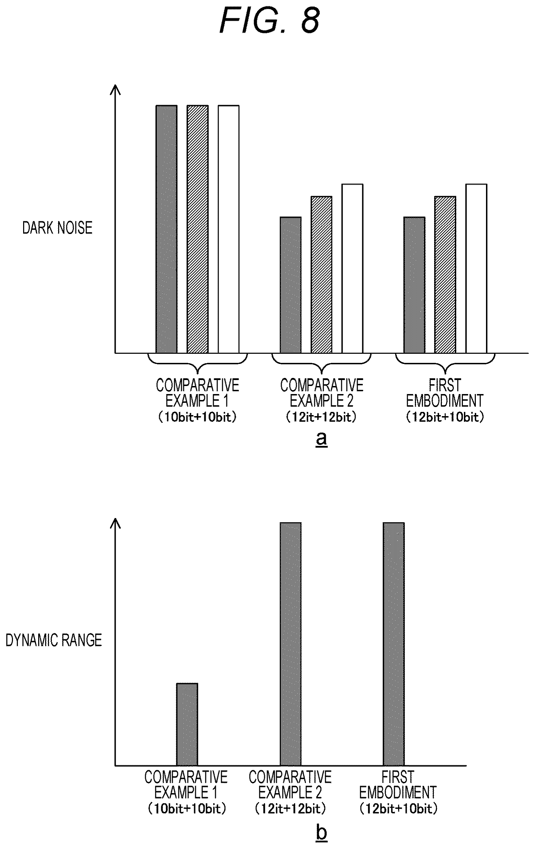

a of Fig. 8 illustrates dark noise of Comparative Examples 1 and 2 and the first embodiment. The height of the black bar in the drawing indicates dark noise when the analog gain is set to a predetermined reference value. In addition, the height of the hatched bar indicates dark noise when the analog gain is set to 6 decibels with respect to the reference value. The height of the outlined bar indicates dark noise when the analog gain is set to 18 decibels with respect to the reference value. In the first embodiment, the dark noise is improved to the same extent as Comparative Example 2.

b of the drawing illustrates dynamic ranges of Comparative Examples 1 and 2 and the first embodiment. In the first embodiment, a dynamic range equivalent to that of Comparative Example 2 can be obtained.

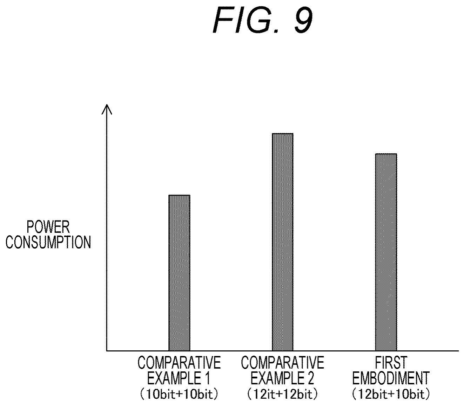

Fig. 9 illustrates power consumption of Comparative Examples 1 and 2 and the first embodiment. In the first embodiment, power consumption is larger than that in Comparative Example 1, but is smaller than that in Comparative Example 2.

As illustrated in Figs. 8 and 9, by setting different resolutions in the subframe F1 and the subframe F2, it is possible to achieve both noise reduction and power reduction.

In addition, as described in Patent Document 1, by arranging two ADCs for each column and adjusting the resolution of each ADC, it is possible to achieve both noise reduction and power reduction similarly to the first embodiment. However, in this configuration, the number of ADCs is doubled as compared with the first embodiment, and the circuit scale is increased.

### [Operation Example of Imaging Device]

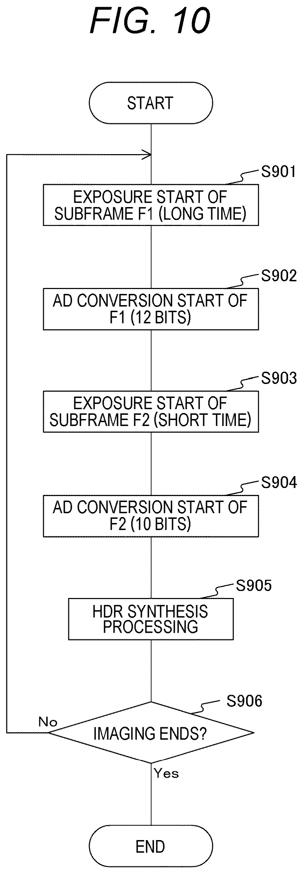

Fig. 10 is a flowchart illustrating an example of the operation of the imaging device 100 according to the first embodiment of the present technology. This operation is started, for example, when a predetermined application for performing HDR synthesis processing is executed.

The solid-state imaging element 200 sequentially starts exposure of the subframe F1 from the first row (step S901). The exposure time of the subframe F1 is set to be longer than that of the subframe F2. Then, the solid-state imaging element 200 sequentially ends the exposure of the subframe F1 from the first row and starts the AD conversion in the 12-bit mode (step S902).

Furthermore, the solid-state imaging element 200 sequentially starts exposure of the subframe F2 from the first row (step S903). Then, the solid-state imaging element 200 sequentially ends the exposure of the subframe F2 from the first row and starts the AD conversion in the 10-bit mode (step S904).

Then, the application processor 110 performs HDR synthesis processing to generate a synthesis frame (step S905). The imaging device 100 determines whether or not termination of imaging has been instructed (step S906).

In a case where the instruction to terminate the imaging is not given (step S906: No), the imaging device 100 repeats step S901 and the subsequent steps. On the other hand, in a case where termination of imaging has been instructed (step S906: Yes), the imaging device 100 terminates the operation for imaging.

Note that, although the application processor 110 has set the mode such as the 12-bit mode, the logic circuit 220 in the solid-state imaging element 200 can set the mode instead of the application processor 110. In this case, the setting data indicated by the setting signal is embedded in the transmission data.

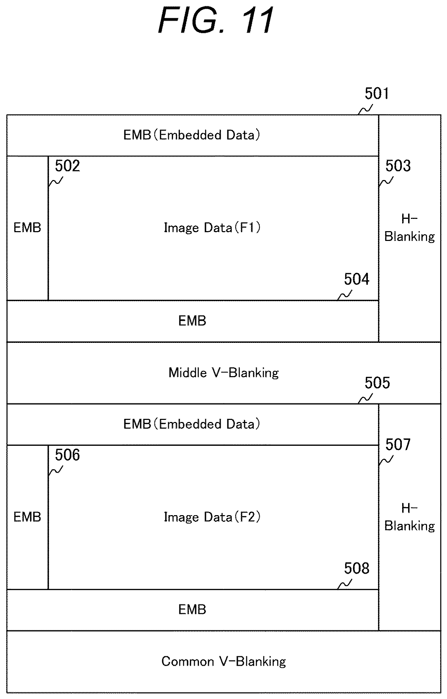

For example, as exemplified in Fig. 11, the transmission data includes image data 503 and 507 and embedding information 501, 502, 504, 505, 506, and 508. Subframe F1 is stored as image data 503, and at least one of surrounding embedding information 501, 502, or 504 includes setting data (such as 12 bit resolution) of subframe F1. In addition, subframe F2 is stored as image data 507, and at least one of surrounding embedding information 505, 506, or 508 includes setting data (10 bit resolution, or the like) of subframe F2. By embedding the setting data in the transmission data as exemplified in the drawing, the application processor 110 can acquire the resolution for each subframe and use the resolution in the HDR synthesis processing.

As described above, according to the first embodiment of the present technology, since the logic circuit 220 controls the resolution of the analog-to-digital converter to a higher value as the exposure time is longer according to the setting signal, it is possible to suppress an increase in circuit scale when achieving both noise reduction and power reduction.

### <2. Second Embodiment>

In the first embodiment described above, the imaging device 100 controls the resolution of the ADC 261 according to the exposure time, but can also control the clock frequency of the counter 263 instead of the resolution. The imaging device 100 according to the second embodiment is different from that of the first embodiment in that a clock frequency of the counter 263 is controlled according to an exposure time.

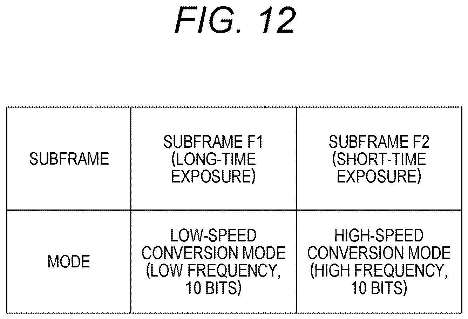

Fig. 12 is a diagram illustrating a setting example of a frequency according to the second embodiment of the present technology. In the second embodiment, the mode determination section 113 can set a plurality of modes having different clock frequencies of the ADC 261 for each frame. A mode in which the clock signal frequency is higher than a predetermined value is hereinafter referred to as a "high-speed conversion mode", and a mode in which the clock signal frequency is lower than the predetermined value is hereinafter referred to as a "low-speed conversion mode".

As exemplified in the drawing, the low-speed conversion mode is set at the time of AD conversion of the subframe F1 of long-time exposure. On the other hand, the high-speed conversion mode is set at the time of AD conversion of the short-time exposure subframe F2. The resolution at the time of AD conversion of each of the subframes F1 and F2 is arbitrary, and is set to, for example, the same value (10 bits or the like).

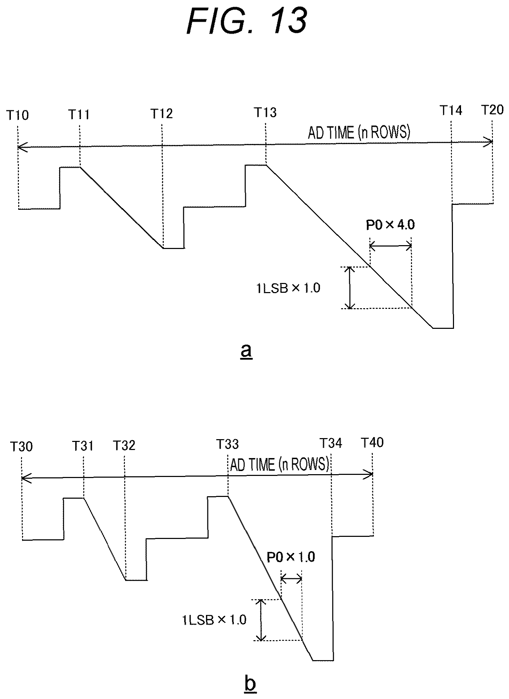

Fig. 13 is a diagram illustrating an example of a waveform of a ramp signal according to the second embodiment of the present technology. a of the drawing indicates a waveform of a ramp signal at the time of AD conversion of the long-time exposure signal, and b of the drawing indicates a waveform of a ramp signal at the time of AD conversion of the short-time exposure signal.

As exemplified in a of the drawing, the low-speed conversion mode is set at the time of AD conversion of the long-time exposure signal. In this low-speed conversion mode, the cycle of the clock signal for driving the counter is set to a value 4.0 times P0, for example. The change amount of the ramp signal within this cycle is 1.0 times the level corresponding to 1LSB.

On the other hand, as exemplified in b of the drawing, the high-speed conversion mode is set at the time of AD conversion of the short-time exposure signal. In this high-speed conversion mode, the cycle of the clock signal is set to a value 1.0 times P0, for example. In addition, the slope of the ramp signal is set to a steeper value as the frequency of the clock signal increases. For example, the slope of the ramp signal corresponding to the short-time exposure signal is set to four times the slope of the ramp signal corresponding to the long-time exposure signal. As a result, the change amount of the ramp signal within the cycle of P0 is 1.0 times the level corresponding to 1LSB.

As exemplified in a of the drawing, in the low-speed conversion mode, since the slope of the ramp signal is gentle, the noise bandwidth of the comparator 262 in the ADC 261 is narrowed, the pixel noise and the circuit noise are reduced, and a large effect of reducing the noise is obtained. However, since the AD conversion time becomes long, the blanking period becomes short, and the power consumption becomes large.

Therefore, in the subframe F2 in which light shot noise is dominant and dark noise is not important, the logic circuit 220 executes AD conversion in the high-speed conversion mode in which the clock frequency is high. In the high-speed conversion mode, since the slope of the ramp signal is steep, a large effect is obtained for power reduction by shortening the AD conversion time and securing a long blanking period.

Here, a configuration in which both the long-time exposure signal and the short-time exposure signal are set to the high-speed conversion mode at the time of AD conversion is assumed as Comparative Example 1. In addition, a configuration in which both the long-time exposure signal and the short-time exposure signal are set to the low-speed conversion mode at the time of AD conversion is assumed as Comparative Example 2.

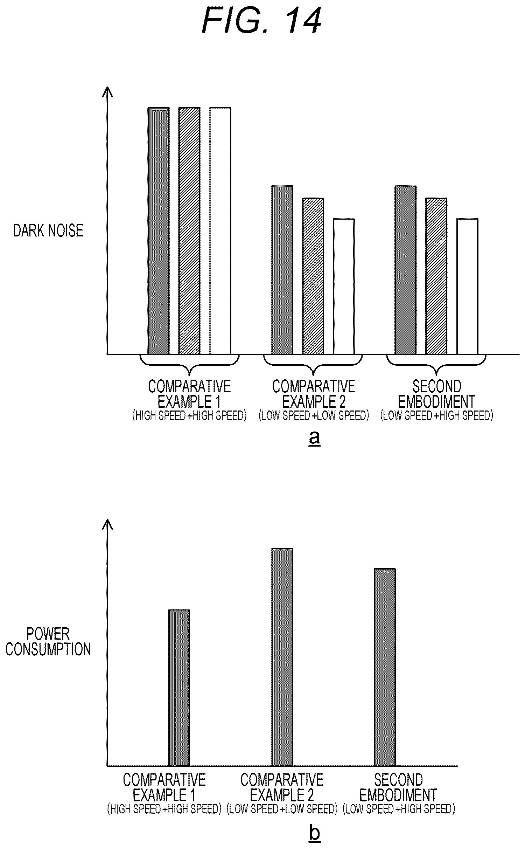

a of Fig. 14 illustrates dark noise of Comparative Examples 1 and 2 and the second embodiment. In the second embodiment, the dark noise is improved to the same extent as Comparative Example 2.

b of the drawing illustrates the power consumption of Comparative Examples 1 and 2 and the second embodiment. In the second embodiment, power consumption is larger than that in Comparative Example 1, but is smaller than that in Comparative Example 2.

As illustrated in the drawing, by setting different clock frequencies in the subframe F1 and the subframe F2, it is possible to achieve both noise reduction and power reduction.

As described above, according to the second embodiment of the present technology, since the logic circuit 220 controls the clock frequency of the analog-to-digital converter to a lower value as the exposure time is longer according to the setting signal, it is possible to suppress an increase in circuit scale when achieving both noise reduction and power reduction.

### <3. Third Embodiment>

In the first embodiment described above, the imaging device 100 transmits the subframes F1 and F2 having different bit depths of the digital signal (in other words, pixel data) for each pixel to the application processor 110, but it is preferable to equalize the bit depths of the subframes F1 and F2. The imaging device 100 according to the third embodiment is different from that of the first embodiment in that subframe F1 is compressed and transmitted.

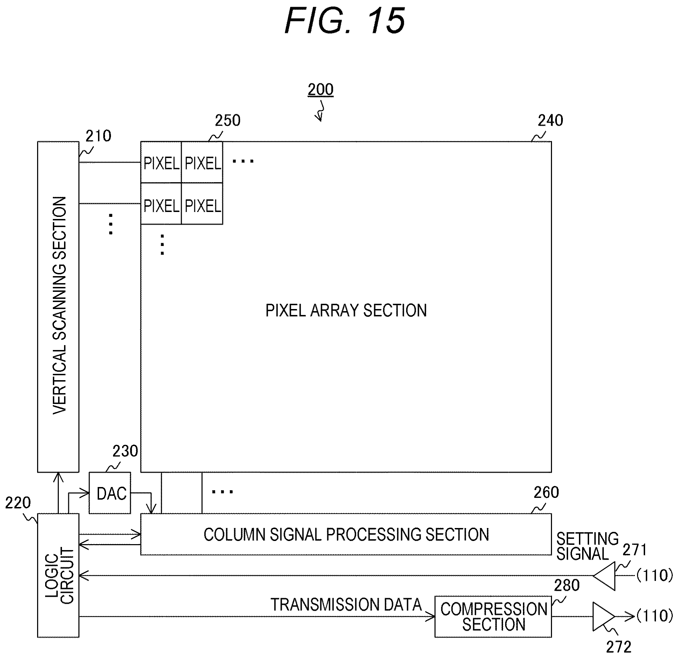

Fig. 15 is a block diagram illustrating a configuration example of the solid-state imaging element 200 according to the third embodiment of the present technology. The solid-state imaging element 200 in the third embodiment is different from that in the first embodiment in further including a compression section 280.

The compression section 280 compresses a digital signal (pixel data) for each pixel for a long-time exposure subframe F1 in the transmission data. For example, while the bit depth of pixel data is 12 bits in the subframe F1, the bit depth is 10 bits in the short-time exposure subframe F2. In this case, the logic circuit 220 controls the compression section 280 to compress the pixel data of the subframe F1 to 10 bits in accordance with the subframe F2. The compression algorithm used is arbitrary, but lossless compression is preferable.

The compression section 280 does not compress the short-time exposure subframe F2, and transmits transmission data including the subframe F2 and the compressed subframe F1 to the application processor 110 via the transmission section 272.

By compressing the subframe F1 of long-time exposure, processing of changing the bit depth of pixel data of the subframe F1 becomes unnecessary in image processing of the application processor 110, and a processing load can be reduced. Note that, although the compression section 280 compresses only the subframe F1, the bit depth can be equalized by compressing both the subframes F1 and F2 at different compression rates.

As described above, according to the third embodiment of the present technology, since the compression section 280 compresses the pixel data of the subframe F1 of long-time exposure, the processing load of the application processor 110 can be reduced.

### <4. Fourth Embodiment>

In the first embodiment described above, the imaging device 100 controls the resolution of the subframe according to the exposure time regardless of the brightness of the frame, but it is preferable to control the resolution in consideration of the brightness of the frame. The imaging device 100 according to the fourth embodiment is different from that of the first embodiment in that resolution is controlled according to exposure time and brightness.

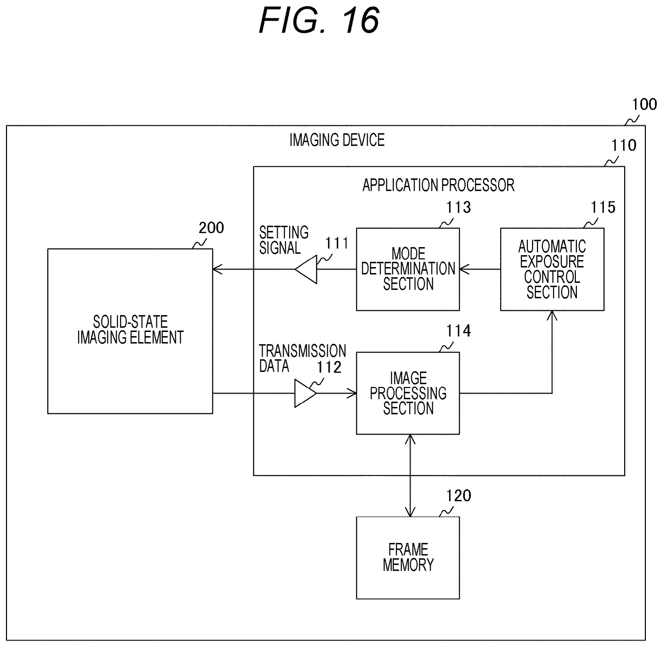

Fig. 16 is a block diagram illustrating a configuration example of the imaging device 100 according to the fourth embodiment of the present technology. The imaging device 100 according to the fourth embodiment is different from that of the first embodiment in further including an automatic exposure control section 115.

The automatic exposure control section 115 measures brightness on the basis of a frame and performs exposure control on the basis of a photometric amount. The automatic exposure control section 115 acquires a frame from the image processing section 114, and measures the brightness of the frame to obtain a photometric amount. Then, the automatic exposure control section 115 calculates an aperture value, an exposure time, and sensitivity so as to obtain an appropriate exposure value on the basis of the photometric amount. The sensitivity is adjusted by, for example, an analog gain.

Then, the automatic exposure control section 115 transmits the obtained set values of the aperture value, the exposure time, and the sensitivity (analog gain) to the solid-state imaging element 200 via the mode determination section 113.

In addition, the mode determination section 113 determines whether or not the photometric amount is larger than a predetermined value (in other words, the frame is bright) on the basis of a set value such as an aperture value. For example, the mode determination section 113 determines that the frame is bright in a case where the analog gain is a low gain less than a predetermined value, and determines that the frame is dark in a case where the analog gain is a high gain equal to or greater than the predetermined value.

Then, the mode determination section 113 sets the resolution on the basis of the brightness of the frame and the exposure time of the subframe. For example, in a case where the frame is bright (for example, in a case where the analog gain is a low gain), the voltage per 1LSB is large, and quantization noise becomes dominant. Therefore, the mode determination section 113 uses the 12-bit mode for the subframe F1 of long-time exposure. In addition, in a bright portion in the screen, quantization noise is likely to be buried in light shot noise, and there is no influence even if the quantization noise is large. Therefore, the 8-bit mode is used for the short-time exposure subframe F2.

On the other hand, in a case where the frame is dark (for example, in a case where the analog gain is a high gain), since the voltage per 1LSB is small and the quantization noise is small, the mode determination section 113 uses the 10-bit mode for the subframe F1 of long-time exposure. In addition, the quantization noise is hardly buried in the light shot noise in the bright portion in the screen, and thus, the mode determination section 113 uses the 10-bit mode also for the short-time exposure subframe F2.

The mode determination section 113 transmits a setting signal including the mode set by itself and the value (analog gain or the like) set by the automatic exposure control section 115 to the solid-state imaging element 200. The logic circuit 220 controls the resolution and the analog gain according to the setting signal.

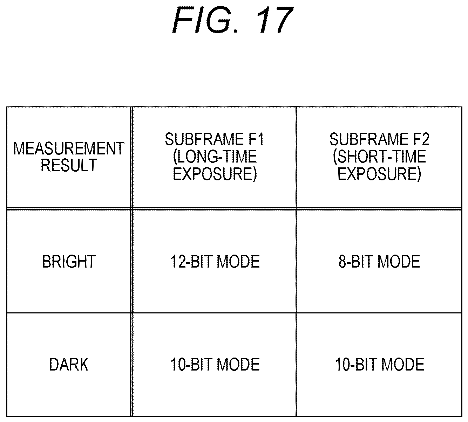

Fig. 17 is a diagram illustrating a setting example of resolution according to the fourth embodiment of the present technology. In a case where the photometric amount is larger than the predetermined value (in other words, bright), the 12-bit mode is set at the time of AD conversion of the subframe F1 of long-time exposure, and the 8-bit mode is set at the time of AD conversion of the subframe F2 of short-time exposure. That is, as the exposure time is longer, higher resolution is set.

On the other hand, in a case where the photometric amount is smaller than the predetermined value (in other words, dark), the 10-bit mode is set for both the subframes F1 and F2.

As exemplified in the drawing, by controlling the resolution according to the brightness and the exposure time, the high resolution is applied only to the necessary subframe, and the power can be reduced while the dynamic range equivalent to that in the case of always using the high resolution is secured.

Note that each of the second and third embodiments can be applied to the fourth embodiment. In a case where the second embodiment is applied, for example, in a case of being bright, the low-speed conversion mode is set to the subframe F1, and the high-speed conversion mode is set to the subframe F2. In the dark case, an intermediate frequency between the high-speed conversion mode and the low-speed conversion mode is set in both subframes F1 and F2.

As described above, according to the fourth embodiment of the present technology, since the logic circuit 220 controls the resolution according to the brightness and the exposure time according to the setting signal, it is possible to reduce the power consumption while ensuring the dynamic range.

### <5. Fifth Embodiment>

In the first embodiment described above, the imaging device 100 controls the resolution according to the exposure time regardless of the power consumption of the application processor 110, but it is preferable to control the resolution in consideration of the power consumption. The imaging device 100 according to the fifth embodiment is different from that of the first embodiment in that resolution is controlled according to an exposure time and power consumption.

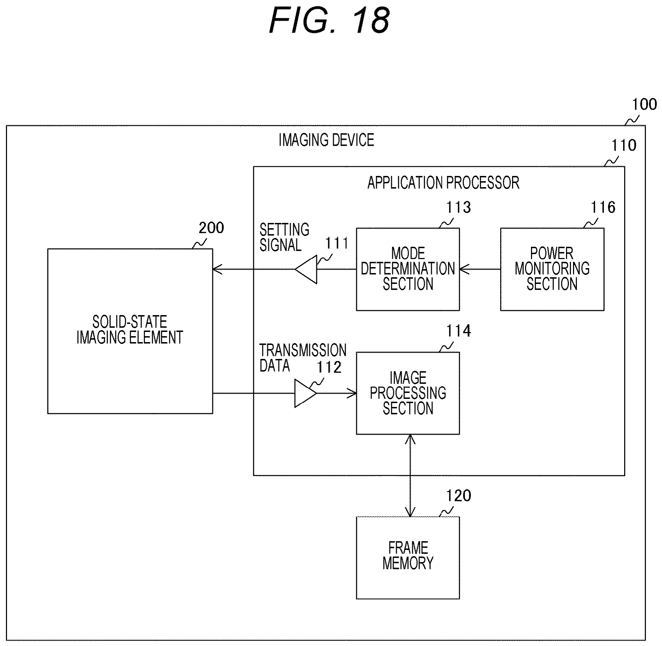

Fig. 18 is a block diagram illustrating a configuration example of the imaging device 100 according to the fifth embodiment of the present technology. The imaging device 100 in the fifth embodiment is different from that in the first embodiment in that a power monitoring section 116 is further provided in the application processor 110.

The power monitoring section 116 monitors and measures the power consumption of a set including the application processor 110. The power monitoring section 116 supplies the measured value to the mode determination section 113. Note that the application processor 110 is an example of a circuit that processes a digital signal described in the claims.

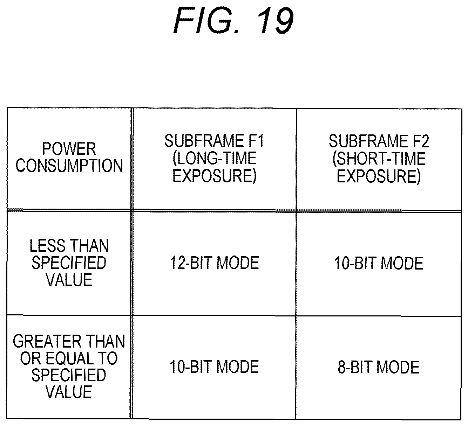

Fig. 19 is a diagram illustrating a setting example of resolution according to the fifth embodiment of the present technology. The mode determination section 113 sets a resolution having a lower value as the power consumption increases, and the logic circuit 220 controls the resolution according to the setting. For example, in a case where the power consumption is less than the specified value, the 12-bit mode is set at the time of AD conversion of the long-time exposure subframe F1, and the 10-bit mode is set at the time of AD conversion of the short-time exposure subframe F2.

On the other hand, in a case where the power consumption is greater than or equal to the specified value, the 10-bit mode is set at the time of AD conversion of the subframe F1, and the 8-bit mode is set at the time of AD conversion of the subframe F2.

As illustrated in the drawing, by controlling the resolution to a lower value as the power consumption of the application processor 110 increases, it is possible to suppress an increase in the power consumption and extend the imaging time.

Note that each of the second, third, and fourth embodiments can be applied to the fifth embodiment. In a case where the second embodiment is applied, for example, the power consumption of the solid-state imaging element 200 is measured, and the frequency is controlled to a higher value as the power consumption increases.

As described above, according to the fifth embodiment of the present technology, since the logic circuit 220 controls the resolution to a lower value as the power consumption increases according to the setting signal, it is possible to suppress an increase in power consumption.

### <6. Sixth Embodiment>

In the first embodiment described above, the imaging device 100 controls the resolution according to the exposure time regardless of the temperature of the solid-state imaging element 200, but it is preferable to control the resolution in consideration of the temperature. The imaging device 100 according to the sixth embodiment is different from that of the first embodiment in that resolution is controlled according to an exposure time and a temperature.

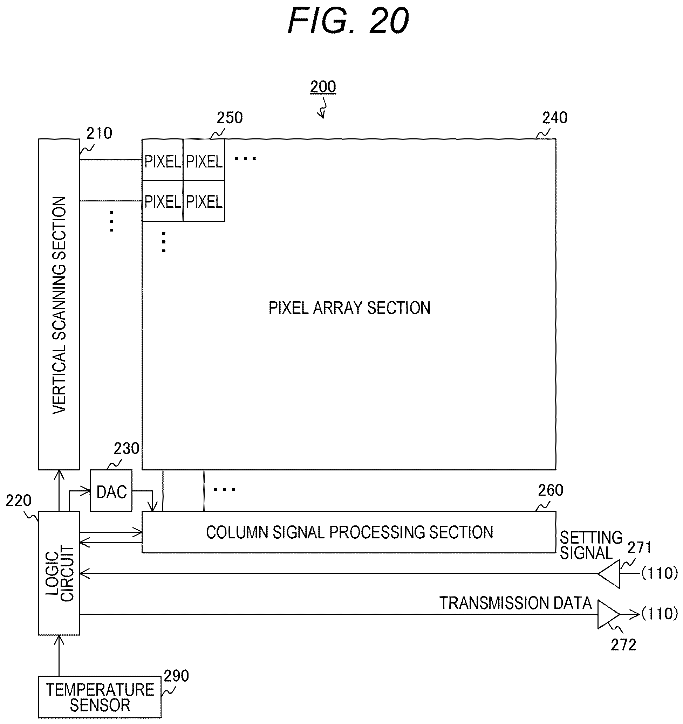

Fig. 20 is a block diagram illustrating a configuration example of the solid-state imaging element 200 according to the sixth embodiment of the present technology. The solid-state imaging element 200 in the sixth embodiment is different from that in the first embodiment in further including a temperature sensor 290.

The temperature sensor 290 measures the temperature of the solid-state imaging element 200. The temperature sensor 290 supplies a measured value of the temperature to the logic circuit 220. The logic circuit 220 stores the temperature in the transmission data and transmits the temperature to the application processor 110 via the transmission section 272.

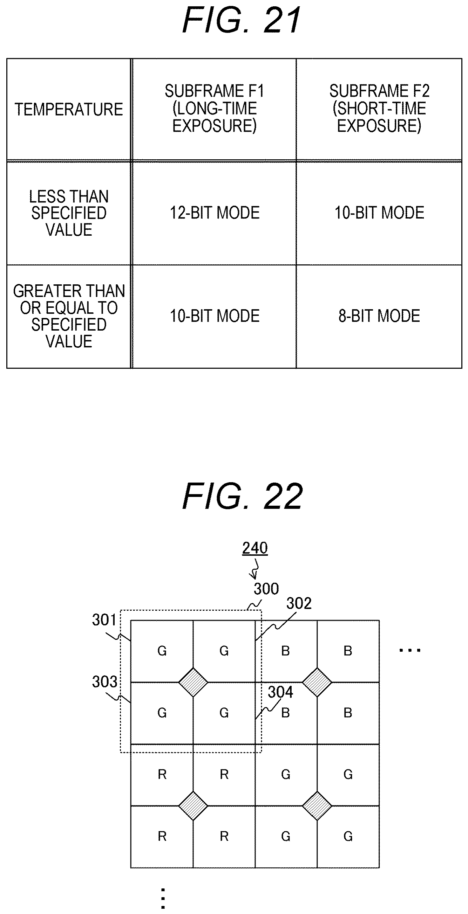

Fig. 21 is a diagram illustrating a setting example of resolution according to the sixth embodiment of the present technology. The mode determination section 113 sets a resolution having a lower value as the temperature of the solid-state imaging element 200 increases, and the logic circuit 220 controls the resolution according to the setting. For example, in a case where the temperature is less than the specified value, the 12-bit mode is set at the time of AD conversion of the long-time exposure subframe F1, and the 10-bit mode is set at the time of AD conversion of the short-time exposure subframe F2.

On the other hand, in a case where the temperature is equal to or higher than the specified value, the 10-bit mode is set at the time of AD conversion of the subframe F1, and the 8-bit mode is set at the time of AD conversion of the subframe F2.

As illustrated in the drawing, by controlling the resolution to a lower value as the temperature of the solid-state imaging element 200 increases, an increase in the temperature can be suppressed, shutdown due to heat can be prevented, and the imaging time can be extended.

Note that each of the second, third, fourth, and fifth embodiments can be applied to the sixth embodiment. In a case where the second embodiment is applied, the frequency is controlled to a higher value as the temperature is higher.

As described above, according to the sixth embodiment of the present technology, since the logic circuit 220 controls the resolution to a lower value as the temperature is higher according to the setting signal, it is possible to suppress an increase in temperature.

### <7. Seventh Embodiment>

In the above-described first embodiment, the imaging device 100 generates a pixel signal for each pixel, but these pixel signals can also be subjected to analog addition. The imaging device 100 in the seventh embodiment is different from that in the first embodiment in that pixel signals are added as necessary.

Fig. 22 is a diagram illustrating an example of an array of pixels according to the seventh embodiment of the present technology. In the pixel array section 240, a plurality of shared blocks 300 is arranged. In each shared block 300, a plurality of pixels sharing the floating diffusion layer is arranged. For example, in the shared block 300, the pixels 301, 302, 303, and 304 are arranged in 2 rows × 2 columns. Furthermore, the colors of all the pixels in the shared block 300 are equalized. For example, the colors of the pixels are arranged in a quad Bayer array. In the drawing, a diamond-shaped figure indicates a floating diffusion layer, and four pixels of the same color adjacent to the floating diffusion layer correspond to the shared block 300.

Note that the pixels 301 and 302 are examples of first and second pixels described in the claims.

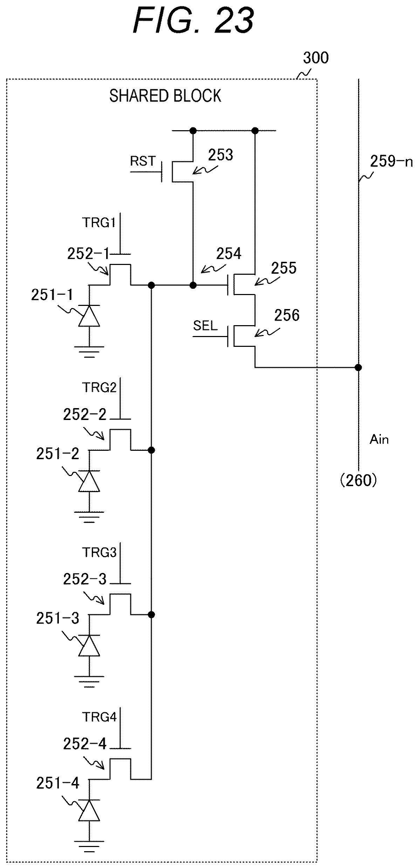

Fig. 23 is a circuit diagram illustrating a configuration example of the shared block 300 according to the seventh embodiment of the present technology. The shared block 300 includes photoelectric conversion elements 251-1, 251-2, 251-3, and 251-4 and transfer transistors 252-1, 252-2, 252-3, and 252-4. In addition, the shared block 300 includes a reset transistor 253, a floating diffusion layer 254, an amplification transistor 255, and a selection transistor 256.

The transfer transistor 252-1 transfers a charge from the photoelectric conversion element 251-1 to the floating diffusion layer 254 in accordance with a drive signal TRG1 from the vertical scanning section 210. The transfer transistor 252-2 transfers a charge from the photoelectric conversion element 251-2 to the floating diffusion layer 254 in accordance with a drive signal TRG2 from the vertical scanning section 210. The transfer transistor 252-3 transfers a charge from the photoelectric conversion element 251-3 to the floating diffusion layer 254 in accordance with a drive signal TRG3 from the vertical scanning section 210. The transfer transistor 252-4 transfers a charge from the photoelectric conversion element 251-4 to the floating diffusion layer 254 in accordance with a drive signal TRG4 from the vertical scanning section 210.

The connection configuration of the reset transistor 253, the floating diffusion layer 254, the amplification transistor 255, and the selection transistor 256 is similar to that of the first embodiment.

The vertical scanning section 210 simultaneously controls two or more of the four transfer transistors to be in the on state by the transfer signals TRG1, TRG2, TRG3, and TRG4, so that it is possible to perform analog addition on two or more pixel signals of the four pixels. A mode in which the pixel addition is performed is referred to as an "addition mode", and a mode in which the pixel addition is not performed is referred to as a "non-addition mode".

The mode determination section 113 in the seventh embodiment can also set the presence or absence of pixel addition in addition to the resolution. The logic circuit 220 controls the vertical scanning section 210 according to the setting signal of the mode determination section 113 to perform pixel addition in the addition mode.

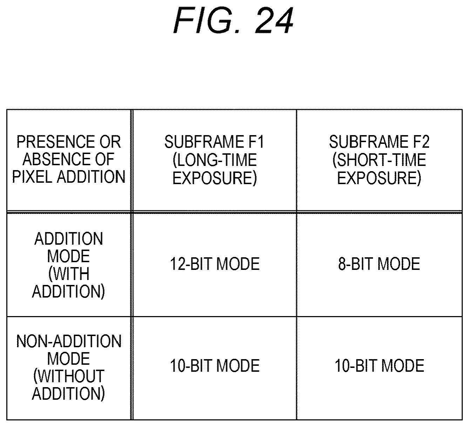

Fig. 24 is a diagram illustrating a setting example of resolution according to the sixth embodiment of the present technology. In the pixel addition mode, the signal after addition is larger than that before addition, the voltage per LSB is large, and quantization noise becomes dominant. Therefore, a 12-bit mode capable of reducing quantization noise is set at the time of AD conversion of the subframe F1 of long-time exposure. In addition, a bright portion in the screen is easily buried in the light shot noise, and thus, there is no influence even if the quantization noise is large. Therefore, an 8-bit mode is set at the time of AD conversion of the short-time exposure subframe F2.

On the other hand, in the non-addition mode, since the voltage per 1LSB is small and the quantization noise is small, the 10-bit mode is set at the time of AD conversion of the subframe F1. In addition, since a bright portion in the screen has a smaller signal amount than that at the time of addition and is hardly buried in light shot noise, the 10-bit mode is set also at the time of AD conversion of the subframe F2.

By controlling the resolution according to the exposure time in the pixel addition mode, it is possible to apply high resolution only to a necessary subframe, and it is possible to reduce power while ensuring a dynamic range equivalent to that in a case where high resolution is always used.

Note that, in the drawing, both control in a case where pixel addition is performed in both the subframes F1 and F2 and control in a case where pixel addition is not performed in both the subframes F1 and F2 are illustrated, but the present invention is not limited to this control. It is also possible to change whether or not to add in each of the subframes. For example, the subframe F1 may have a resolution of 12 bits in the addition mode, and the subframe F2 may have a resolution of 10 bits in the non-addition mode.

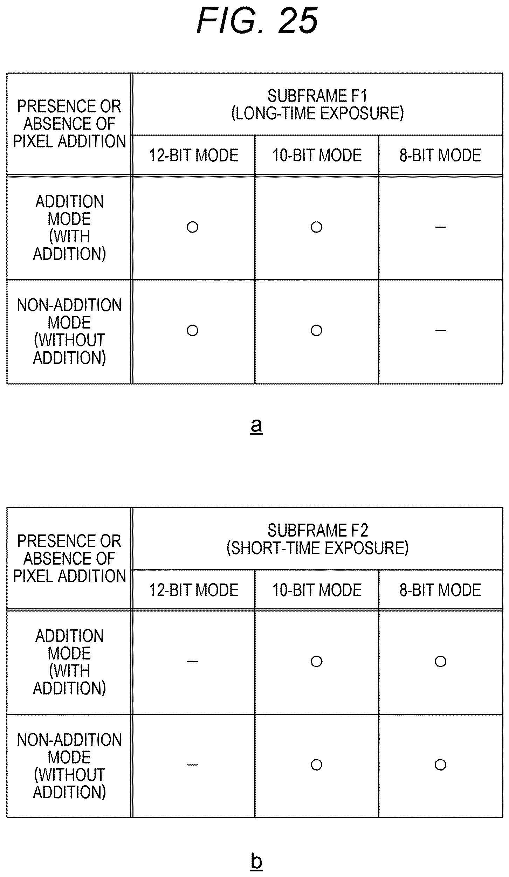

Fig. 25 is a diagram illustrating an example of a settable resolution according to the seventh embodiment of the present technology. A circle in the drawing indicates that the setting is possible.

a of the drawing illustrates an example of the resolution that can be set for the subframe F1 of the long-time exposure. At the time of AD conversion of this subframe, a 12-bit mode or a 10-bit mode is set in each of the addition mode and the non-addition mode.

b of the drawing illustrates an example of the resolution that can be set for the short-time exposure subframe F2. At the time of AD conversion of this subframe, a 10-bit mode or an 8-bit mode is set in each of the addition mode and the non-addition mode.

Note that each of the second, third, fourth, fifth, and sixth embodiments can be applied to the seventh embodiment. In a case where the second embodiment is applied, for example, in the addition mode, the low-speed conversion mode is set to the subframe F1, and the high-speed conversion mode is set to the subframe F2. In the non-addition mode, an intermediate frequency between the high-speed conversion mode and the low-speed conversion mode is set in both subframes F1 and F2.

As described above, according to the seventh embodiment of the present technology, since the logic circuit 220 controls the resolution according to the exposure time at the time of pixel addition according to the setting signal, it is possible to reduce the power consumption while ensuring the dynamic range.

### <8. Eighth Embodiment>

In the first embodiment described above, the imaging device 100 controls the resolution according to the exposure time, but the resolution of a predetermined region in the frame can be made higher than that of other regions. The imaging device 100 according to the eighth embodiment is different from that of the first embodiment in that resolution of a certain region is higher than that of other regions.

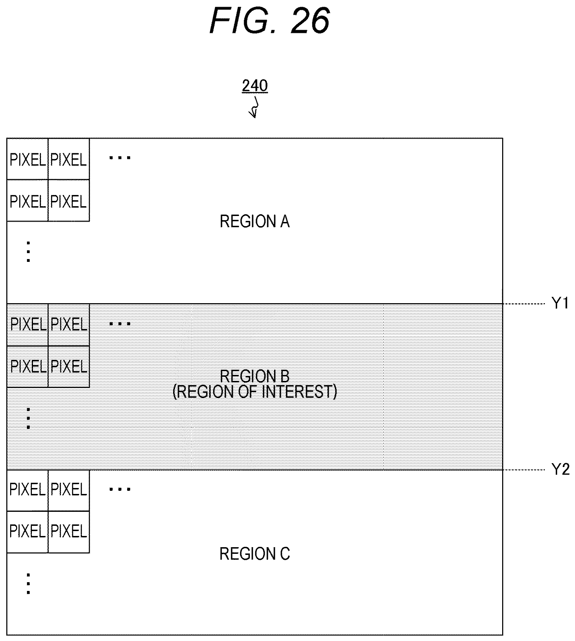

Fig. 26 is a diagram illustrating a setting example of a region according to the eighth embodiment of the present technology. For example, the application processor 110 can analyze the frame to detect the presence or absence of a predetermined subject and set a region in which the subject is captured as the region of interest. The region B from the row addresses Y1 to Y2 corresponds to the region of interest. In addition, upper and lower regions of the region of interest are referred to as a region A and a region C, respectively.

Note that, in the drawing, the boundary of the region of interest is set in units of rows, but the boundary of the region of interest can also be set in units of columns.

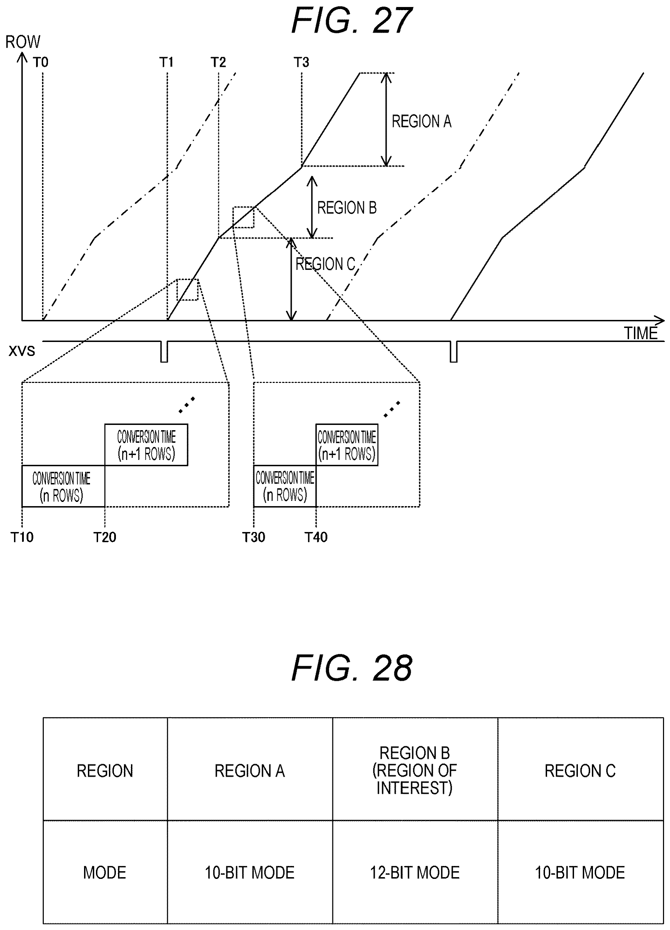

Fig. 27 is a timing chart illustrating an example of exposure and read control according to the eighth embodiment of the present technology. The vertical scanning section 210 selects the first row at timing T0 and starts exposure of the row. Subsequently, the vertical scanning section 210 sequentially starts exposure of the second and subsequent rows.

Then, at timing T1, the vertical scanning section 210 selects the first row in the region C and ends the exposure, and the ADC 261 of each column performs AD conversion on the pixel signal of the row. Subsequently, the vertical scanning section 210 sequentially ends the exposure of the second row or more, and the ADC 261 of each column performs AD conversion on the pixel signal of the row. The AD conversion of the region C ends at timing T2.

Then, within a period from immediately after timing T2 to timing T3, rows in the region B are sequentially selected and subjected to AD conversion. Immediately after the timing T3, the rows in the region A are sequentially selected and subjected to AD conversion.

Furthermore, the AD conversion of the n-th row in the region C is executed from timing T10 to timing T20. On the other hand, AD conversion of the n-th row in the region B that is the region of interest is executed from timing T30 to timing T40.

The mode determination section 113 sets the resolution of the region B (region of interest) to a higher value than the other regions A and C, and the logic circuit 220 controls the resolution according to the setting. Therefore, the AD conversion time of the region B (time from timing T10 to T20) is longer than the AD conversion time of the region C (time from timing T30 to T40). The resolution of the region A is set to be the same as that of the region C, and the AD conversion time is also the same.

As illustrated in the drawing, by making the resolution of the region of interest higher than other regions, noise can be reduced only in the region of interest. In addition, power consumption can be reduced as compared with a case where AD conversion is performed on the entire region with high resolution.

Fig. 28 is a diagram illustrating a setting example of resolution according to the eighth embodiment of the present technology. For example, a 10-bit mode is set at the time of AD conversion of each of the regions A and C. On the other hand, a 12-bit mode is set at the time of AD conversion of the region B (region of interest). Note that the combination of the resolutions is not limited to 12 bits and 10 bits.

As described above, according to the eighth embodiment of the present technology, since the logic circuit 220 makes the resolution of the region of interest higher than other regions according to the setting signal, it is possible to preferentially reduce noise in the region of interest while suppressing an increase in power consumption.

### <9. Ninth Embodiment>

In the above-described eighth embodiment, the imaging device 100 generates a pixel signal for each pixel, but these pixel signals can also be subjected to analog addition. The imaging device 100 in the ninth embodiment is different from that in the eighth embodiment in that pixel signals are added as necessary.

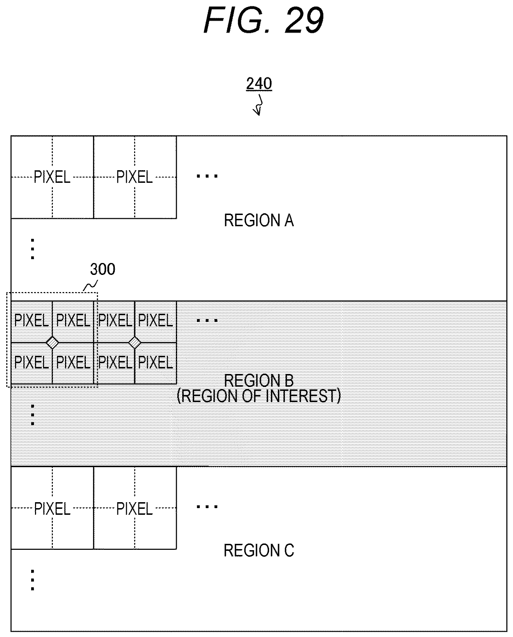

Fig. 29 is a diagram illustrating a setting example of a region according to the ninth embodiment of the present technology. In the eighth embodiment, a plurality of shared blocks 300 is arranged in the pixel array section 240 similarly to the seventh embodiment. In each shared block 300, a plurality of pixels sharing the floating diffusion layer is arranged.

The mode determination section 113 can set whether or not to perform pixel addition for each region. For example, the non-addition mode is set to the region B which is the region of interest, and the addition mode is set to the regions A and C.

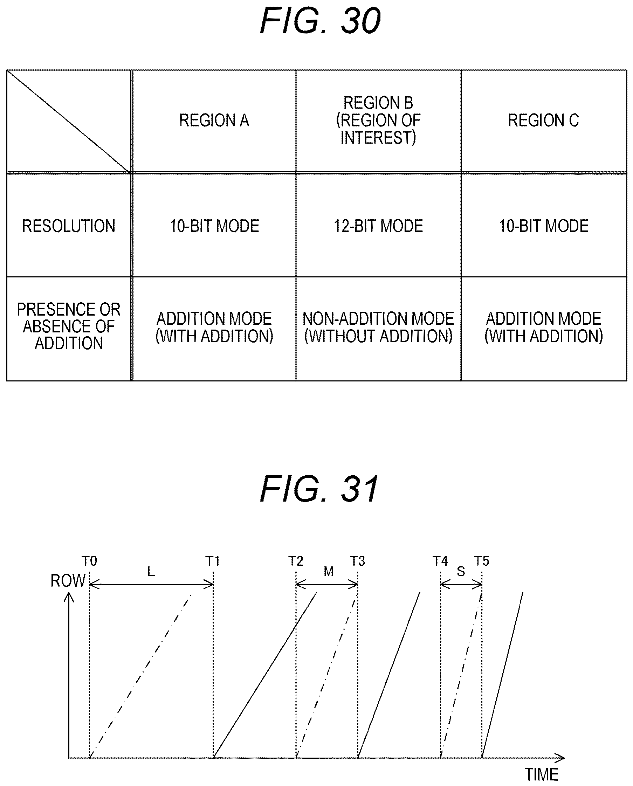

Fig. 30 is a diagram illustrating a setting example of resolution and the like according to the ninth embodiment of the present technology. Pixels in the region B of the region of interest are added, and a 12-bit mode is set. On the other hand, the pixels in the regions A and C are not added, and the 10-bit mode is set.

As illustrated in the drawing, the resolution of the region of interest can be increased and the noise can be reduced by the control of increasing the resolution by non-adding only the region of interest. In addition, it is possible to reduce power consumption as compared with a case where non-addition and high resolution are set for the entire region.

As described above, according to the ninth embodiment of the present technology, since the logic circuit 220 adds pixels in a region other than the region of interest according to the setting signal, it is possible to improve the resolution of the region of interest while suppressing an increase in power consumption.

### <10. 10th Embodiment>

In the first embodiment described above, the imaging device 100 synthesizes two subframes, but the dynamic range may be insufficient with two subframes. The imaging device 100 according to the 10th embodiment is different from that of the first embodiment in that three subframes are synthesized.

Fig. 31 is a timing chart illustrating an example of exposure control according to the 10th embodiment of the present technology. The vertical scanning section 210 sequentially starts exposure of each row after timing T0. The vertical scanning section 210 sequentially ends the exposure of each row after the timing T1, and the ADC 261 of each column performs the AD conversion on the pixel signal for each row. As a result, a first subframe is generated. The exposure time of this subframe is the time L from the timing T0 to T1.

Furthermore, the vertical scanning section 210 sequentially starts exposure of each row after timing T2. The vertical scanning section 210 sequentially ends the exposure of each row after timing T3, and the ADC 261 of each column performs the AD conversion on the pixel signal for each row. As a result, a second subframe is generated. The exposure time of this subframe is a time M from the timing T2 to T3. M is set to a value shorter than L. Hereinafter, a pixel signal whose exposure time is M is referred to as a "intermediate-time exposure signal".

Furthermore, the vertical scanning section 210 sequentially starts exposure of each row after timing T4. The vertical scanning section 210 sequentially ends the exposure of each row after timing T5, and the ADC 261 of each column performs the AD conversion on the pixel signal for each row. As a result, a third subframe is generated. The exposure time of this subframe is the time S from the timing T4 to T5. S is set to a value shorter than M.

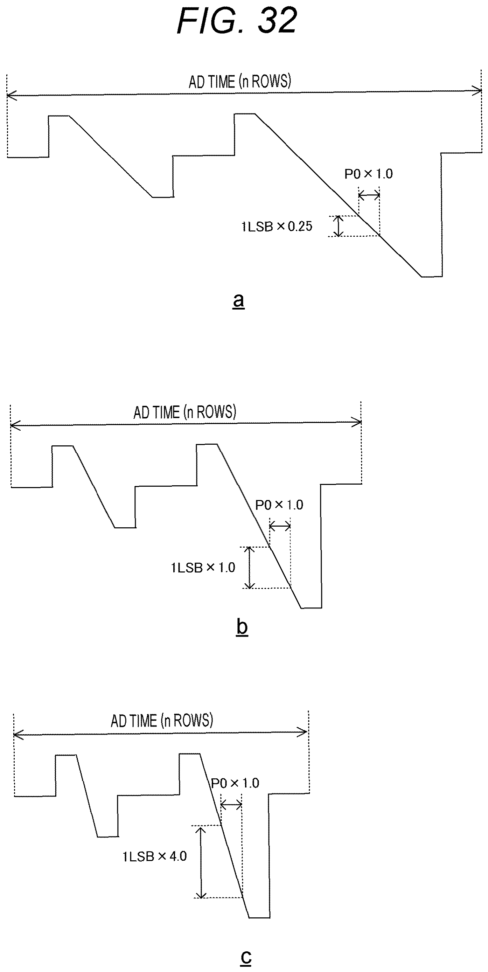

Fig. 32 is a diagram illustrating an example of a waveform of a ramp signal according to the 10th embodiment of the present technology. a of the drawing indicates a waveform of a ramp signal at the time of AD conversion of a long-time exposure signal, and b of the drawing indicates a waveform of a ramp signal at the time of AD conversion of an intermediate-time exposure signal. c of the drawing indicates a waveform of a ramp signal at the time of AD conversion of a short-time exposure signal.

As exemplified in a, b, and c of the drawing, the longer the exposure time, the gentler the slope of the ramp signal is set.

As exemplified in a of the drawing, in the ramp signal corresponding to the long-time exposure signal, the change amount within the reference cycle is 0.25 times the level corresponding to 1LSB.

As exemplified in b of the drawing, in the ramp signal corresponding to the intermediate-time exposure signal, the change amount within the reference cycle is 1.0 times the level corresponding to 1LSB. As exemplified in c of the drawing, in the ramp signal corresponding to the short-time exposure signal, the change amount within the reference cycle is 4.0 times the level corresponding to 1LSB.

Further, as the exposure time is longer, the resolution is controlled to a higher value. For example, a 12-bit mode is set at the time of AD conversion of a long-time exposure signal, and a 10-bit mode is set at the time of AD conversion of an intermediate-time exposure signal. An 8-bit mode is set at the time of AD conversion of the short-time exposure signal.

The application processor 110 synthesizes three subframes. As a result, the dynamic range of the synthesis frame can be expanded as compared with a case where two subframes are synthesized.

Note that the combination of the resolutions for each subframe is not limited to 12 bits, 10 bits, and 8 bits. Further, two subframes out of the three subframes may have the same resolution. For example, the 12-bit mode can be set to the long-time exposure subframe, and the 10-bit mode can be set to the remaining two subframes. Furthermore, the imaging device 100 can also synthesize four or more subframes.

In addition, each of the second, third, fourth, fifth, sixth, and seventh embodiments can be applied to the 10th embodiment.

As described above, according to the 10th embodiment of the present technology, since the solid-state imaging element 200 generates three subframes, the dynamic range of the synthesis frame can be expanded as compared with the first embodiment.

### <11. 11th Embodiment>

In the first embodiment described above, the imaging device 100 synthesizes two subframes, but the number of subframes to be synthesized can be changed between a still image capturing mode for capturing a still image and other modes. The imaging device 100 according to the 11th embodiment is different from that of the first embodiment in that the number of subframes to be synthesized is changed between a still image capturing mode and other modes.

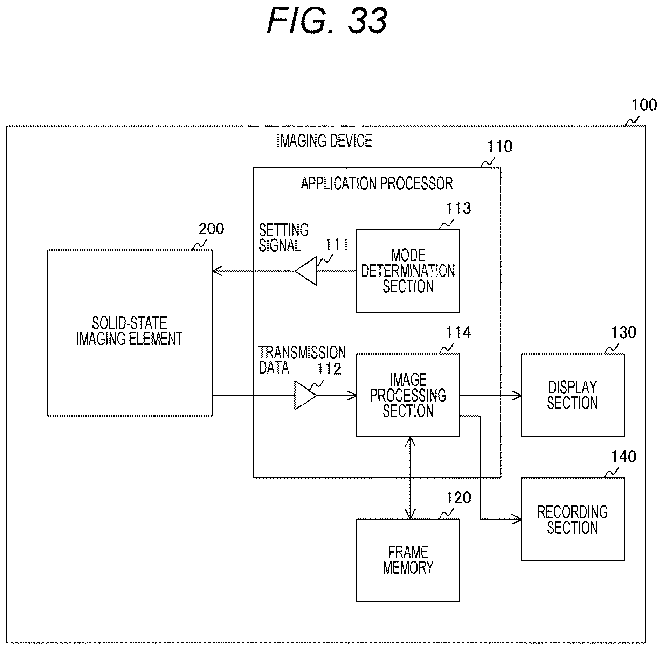

Fig. 33 is a block diagram illustrating a configuration example of the imaging device 100 according to the 11th embodiment of the present technology. The imaging device 100 according to the 11th embodiment is different from that of the first embodiment in further including a display section 130 and a recording section 140.

The display section 130 displays the synthesis frame from the image processing section 114. The recording section 140 records the synthesis frame from the image processing section 114. As the recording section 140, for example, a non-volatile memory is used.

In the 11th embodiment, the live view mode and the still image capturing mode can be exclusively set in the imaging device 100. The live view mode is a mode in which the image processing section 114 repeatedly generates a synthesis frame in synchronization with the vertical synchronization signal and displays the synthesis frame on the display section 130. On the other hand, the still image capturing mode is a mode in which the image processing section 114 generates one synthesis frame and causes the recording section 140 to record the synthesis frame as a still image.

For example, when a predetermined application for imaging is executed, the imaging device 100 shifts to the live view mode. Then, when the user performs a predetermined operation such as pressing of a shutter button, the imaging device 100 shifts to the still image capturing mode, and shifts to the live view mode when the synthesis frame is recorded.

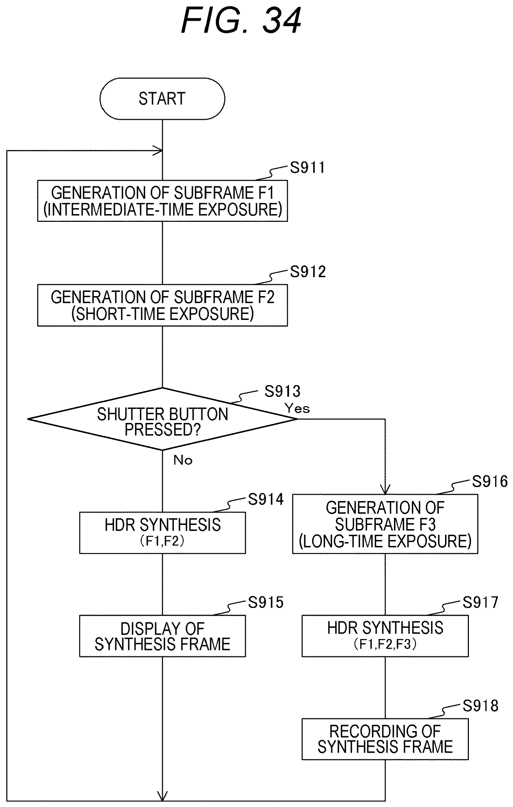

Fig. 34 is a flowchart illustrating an example of the operation of the imaging device 100 according to the 11th embodiment of the present technology. This operation is started, for example, when a predetermined application for imaging is executed.

The solid-state imaging element 200 in the imaging device 100 generates the subframe F1 of the intermediate-time exposure in synchronization with the vertical synchronization signal in the live view mode (step S911), and generates the subframe F2 of the short-time exposure (step S912). The imaging device 100 determines whether or not the shutter button has been pressed (step S913).

In a case where the shutter button is not pressed (step S913: No), the application processor 110 performs HDR synthesis on the subframes F1 and F2 to generate a synthesis frame (step S914). Then, the display section 130 displays the synthesis frame (step S915). After step S915, the imaging device 100 repeats step S911 and subsequent steps.

On the other hand, in a case where the shutter button is pressed (step S913: Yes), the imaging device 100 shifts to the still image capturing mode, and the solid-state imaging element 200 generates the subframe F3 for long-time exposure (step S916). The application processor 110 performs HDR synthesis on the three subframes F1, F2, and F3 to generate a synthesis frame (step S917). Then, the display section 130 records the synthesis frame (step S918). After step S918, the imaging device 100 shifts to the live view mode, and repeats step S911 and subsequent steps.

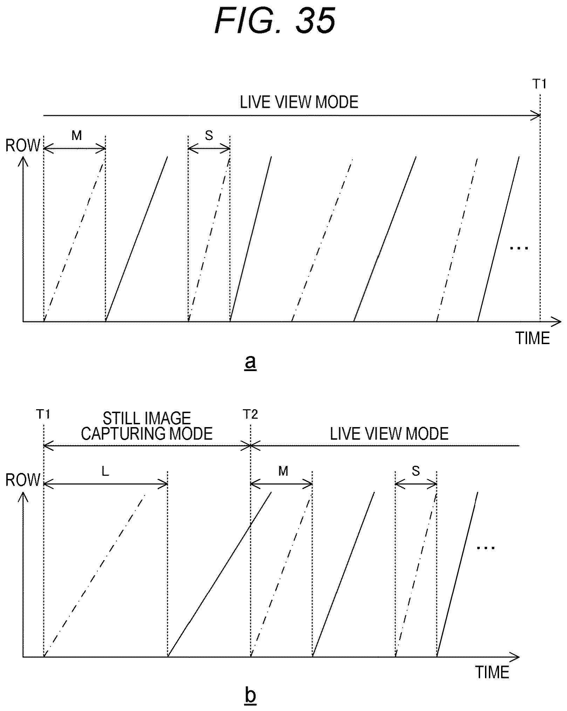

Fig. 35 is a timing chart illustrating an example of exposure control according to the 11th embodiment of the present technology. As exemplified in a of the drawing, the solid-state imaging element 200 alternately generates a subframe F1 with an exposure time M and a subframe F2 with an exposure time S in the live view mode. M is set to a time longer than S. In addition, each time the subframes F1 and F2 are generated, the application processor 110 synthesizes and displays the subframes F1 and F2 on the display section 130.

As exemplified in b of the drawing, when the shutter button is pressed at timing T1, the imaging device 100 shifts to the still image capturing mode, and the solid-state imaging element 200 generates a subframe F3 having an exposure time of L. A time longer than M is set as L. In addition, the application processor 110 synthesizes the subframes F1 and F2 and the subframe F3 generated immediately before the shift to the still image capturing mode, and causes the recording section 140 to record the synthesis frame as a still image.

At timing T2 after recording of the synthesis frame, the imaging device 100 shifts to the live view mode, and the solid-state imaging element 200 alternately generates the subframes F1 and F2.

As described above, in the still image capturing mode, three subframes, that is, two subframes generated immediately before the shift to the still image capturing mode and a subframe generated after the shift to the still image capturing mode are synthesized. The resolution at the time of the AD conversion of these three pieces is controlled to a higher value as the exposure time is longer. For example, the 10-bit mode is set at the time of AD conversion of the intermediate-time exposure subframe F1, and the 8-bit mode is set at the time of AD conversion of the short-time exposure subframe F2. A 12-bit mode is set at the time of AD conversion of the subframe F3 of long-time exposure.

As described above, the imaging device 100 uses the 12-bit mode only immediately after the imaging operation by the user, and uses the 10-bit mode or the 8-bit mode as the live view mode in which the operation is performed for a long time. As a result, as compared with a case where the 12-bit mode is always used, it is possible to reduce power while securing an equivalent dynamic range.

Note that the combination of the resolutions for each subframe is not limited to 12 bits, 10 bits, and 8 bits. Further, two subframes out of the three subframes may have the same resolution. For example, the 12-bit mode can be set to the long-time exposure subframe, and the 10-bit mode can be set to the remaining two subframes.

Furthermore, in the live view mode, the solid-state imaging element 200 generates two subframes in synchronization with the vertical synchronization signal, but the number of generated subframes is not limited to two. In the live view mode, the solid-state imaging element 200 can generate only one frame in synchronization with the vertical synchronization signal, and at that time, HDR synthesis is not executed during the period of the live view mode. Furthermore, although the solid-state imaging element 200 generates one subframe in the still image capturing mode, the number of generated subframes is not limited to one, and two or more subframes can be generated.

Note that each of the second, third, fourth, fifth, sixth, seventh, and 10th embodiments can be applied to the 11th embodiment.

As described above, according to the 11th embodiment of the present technology, the solid-state imaging element 200 generates the short-time exposure signal and the intermediate-time exposure signal in the live view mode, and generates the long-time exposure signal in the still image capturing mode. This makes it possible to reduce power consumption while ensuring the dynamic range.

### <12. 12th Embodiment>

In the first embodiment described above, the exposure times of all the pixels in the subframe are the same, but the exposure times can be changed for two pixels of the same color. The imaging device 100 according to the 12th embodiment is different from that of the first embodiment in that exposure times of two pixels of the same color are different from each other.

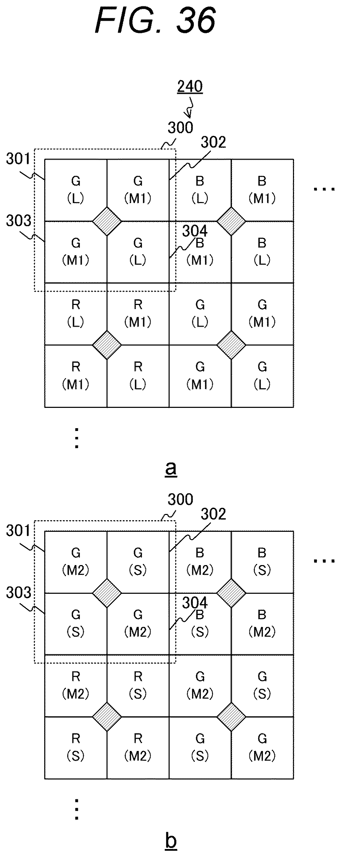

Fig. 36 is a diagram illustrating an example of an exposure time for each pixel according to the 12th embodiment of the present technology. In the 12th embodiment, a plurality of shared blocks 300 is arranged in the pixel array section 240 similarly to the seventh embodiment. In each shared block 300, a plurality of pixels sharing the floating diffusion layer is arranged. Furthermore, the colors of the pixels are arranged in a quad Bayer array. The vertical scanning section 210 exposes two pixels out of the four pixels of the same color and the remaining two pixels for different exposure times.

As exemplified in a of the drawing, attention is paid to adjacent pixels 301, 302, 303, and 304 of the same color in the first subframe F1 of the two synthesis targets. Among these pixels, the exposure times of the pixels 301 and 304 are L, and the exposure times of the remaining two pixels are M1. A time shorter than L is set as M1. The pixel signals of the pixels 302 and 303 are referred to as first intermediate-time exposure signals.

Furthermore, as exemplified in b of the drawing, in the second subframe F2 of the two images to be synthesized, the exposure time of the pixels 301 and 304 is M2, and the exposure time of the remaining two pixels is S. A time shorter than M1 is set as M2, and a time shorter than M2 is set as S. The pixel signals of the pixels 301 and 304 are referred to as second intermediate-time exposure signals.

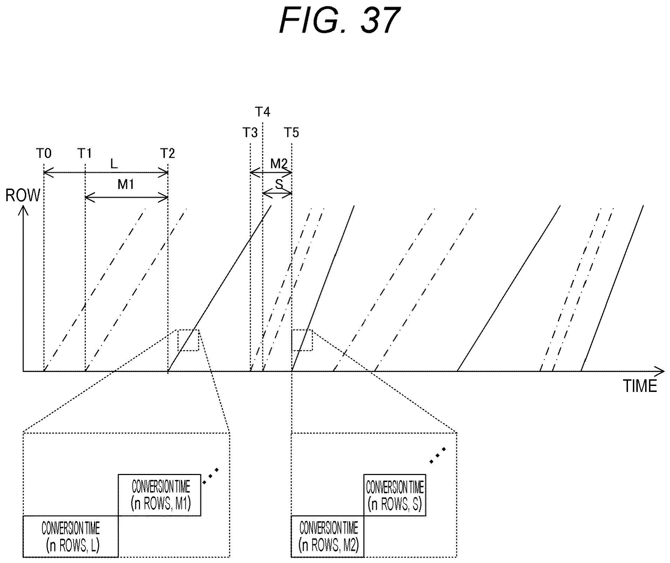

Fig. 37 is a timing chart illustrating an example of exposure control according to the 12th embodiment of the present technology. After the timing T0, the vertical scanning section 210 sequentially selects rows and starts exposure. However, only one of two adjacent pixels of the same color in each row is selected.

Then, after timing T1, the vertical scanning section 210 sequentially selects rows and starts exposure. However, only the other of the two adjacent pixels of the same color in each row is selected.

Subsequently, after timing T2, the vertical scanning section 210 sequentially selects a row and ends the exposure, and the ADC 261 of each column performs AD conversion on the pixel signal of the row. As a result, a first subframe F1 is generated. However, in each of the rows, the pixel signal having the exposure time of L and the pixel signal having the exposure time of M1 are sequentially AD-converted. A period from the timing T0 to T2 in the drawing corresponds to L, and a period from the timing T1 to T2 corresponds to M1.

After timing T3, the vertical scanning section 210 sequentially selects rows and starts exposure. However, only one of two adjacent pixels of the same color in each row is selected.

Then, after timing T4, the vertical scanning section 210 sequentially selects rows and starts exposure. However, only the other of the two adjacent pixels of the same color in each row is selected.

Subsequently, after timing T5, the vertical scanning section 210 sequentially selects a row and ends the exposure, and the ADC 261 of each column performs AD conversion on the pixel signal of the row. As a result, the second subframe F2 is generated. However, in each row, AD conversion is sequentially performed on a pixel signal whose exposure time is M2 and a pixel signal whose exposure time is S. A period from timing T3 to timing T5 in the drawing corresponds to M2, and a period from timing T4 to timing T5 corresponds to S.

In the AD conversion, a higher resolution is set as the exposure time is longer. For example, the 12-bit mode is set at the time of AD conversion of the subframe F1 including the long-time exposure signal and the first intermediate-time exposure signal. A 10-bit mode is set at the time of AD conversion of the subframe F2 including the second intermediate-time exposure signal and the short-time exposure signal. Note that the combination of the resolutions is not limited to 12 bits and 10 bits. For example, a 12-bit mode can be set at the time of AD conversion of the subframe F1, and an 8-bit mode can be set at the time of AD conversion of the subframe F2.

By applying the 12-bit mode only to necessary subframes, it is possible to reduce power while securing an equivalent dynamic range as compared with the case of always operating in the 12-bit mode.

Note that each of the second, third, fourth, fifth, sixth, seventh, 10th, and 11th embodiments can be applied to the 12th embodiment.

As described above, according to the 12th embodiment of the present technology, since the solid-state imaging element 200 performs the AD conversion on the subframes F1 and F2 having different exposure times of two adjacent pixels with different resolutions, it is possible to reduce the power consumption while ensuring the dynamic range.

### <13. 13th Embodiment>

In the first embodiment described above, the solid-state imaging element 200 performs HDR synthesis in the single-lens configuration in the imaging device 100, but a dual-lens configuration can also be used. The imaging device 100 according to the 13th embodiment is different from that of the first embodiment in including a plurality of solid-state imaging elements.

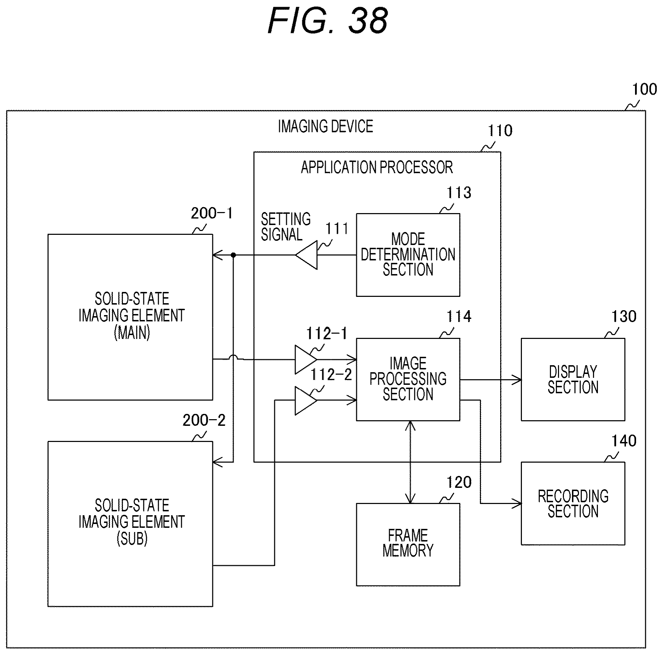

Fig. 38 is a block diagram illustrating a configuration example of the imaging device 100 according to the 13th embodiment of the present technology. The imaging device 100 according to the 13th embodiment is different from that of the first embodiment in that solid-state imaging elements 200-1 and 200-2 are provided instead of the solid-state imaging element 200, and reception sections 112-1 and 112-2 are provided instead of the reception section 112. Furthermore, the imaging device 100 according to the 13th embodiment further includes the display section 130 and the recording section 140. As the imaging device 100, a smartphone or the like is assumed.

The reception sections 112-1 and 112-2 receive transmission data from the solid-state imaging elements 200-1 and 200-2, respectively, and supply the transmission data to the application processor 110. Furthermore, the application processor 110 transmits a setting signal to the solid-state imaging elements 200-1 and 200-2 via the transmission section 111.

The configuration of each of the solid-state imaging elements 200-1 and 200-2 is similar to that of the first embodiment. However, an optical system (not illustrated) that guides light to the solid-state imaging element 200-1 and an optical system (not illustrated) that guides light to the solid-state imaging element 200-2 have different angles of view and zoom magnifications of lenses. For example, the former angle of view is narrower than the latter, and the former zoom magnification is higher than the latter zoom magnification. In addition, the zoom magnification is assumed to be fixed, for example.

For example, an optical system having a narrow angle of view but a high zoom magnification and the solid-state imaging element 200-1 are used as the main camera. On the other hand, an optical system having a wide angle of view but a narrow zoom magnification and the solid-state imaging element 200-2 are used as the sub-camera.

In addition, also in the 13th embodiment, similarly to the 11th embodiment, the live view mode and the still image capturing mode can be set. In the live view mode and the still image capturing mode, one of the main camera and the sub-camera is selected according to a user's operation or the like as a camera that generates a frame to be displayed and recorded on the display section 130 and the recording section 140. In order to seamlessly switch between the main camera and the sub-camera, while a frame of one camera is displayed or recorded, the other camera also needs to generate a frame for automatic exposure or auto focus (AF).

Furthermore, the imaging device 100 can cause both the main camera and the sub-camera to simultaneously generate frames, and perform image processing on the frames. For example, when generating an image in which the background is blurred by image processing, the application processor 110 can acquire parallax information from each frame of the main camera and the sub-camera and detect the background region from the parallax information.

As described above, the main camera and the sub-camera (in other words, the solid-state imaging elements 200-1 and 200-2) may generate frames simultaneously. In this case, the mode determination section 113 controls the resolution at the time of AD conversion of the pixel signal of the solid-state imaging element 200-1 and the resolution at the time of AD conversion of the pixel signal of the solid-state imaging element 200-2 to different values.

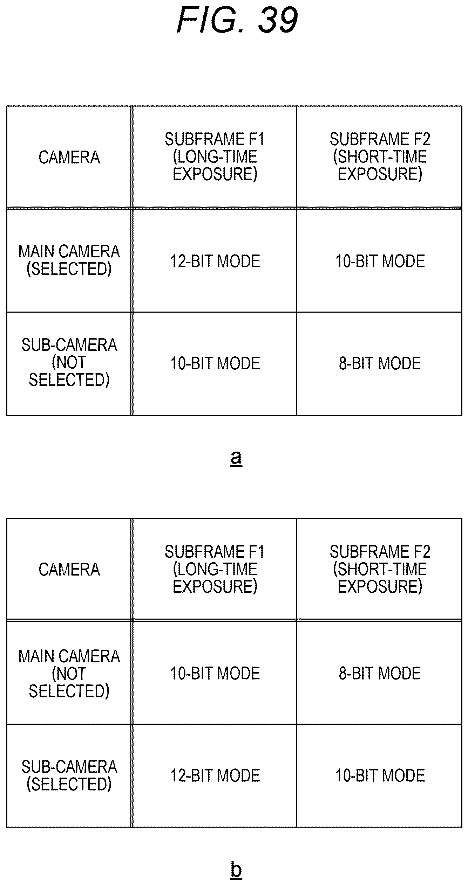

Fig. 39 is a diagram illustrating a setting example of resolution according to the 13th embodiment of the present technology. a of the drawing is a diagram illustrating a setting example of resolution when a main camera is selected as a camera corresponding to a frame to be displayed and recorded in a live view mode or the like. In a case where the main camera is selected by a user operation, the mode determination section 113 sets a 12-bit mode in a case where the solid-state imaging element 200-1 in the main camera performs AD conversion on the subframe F1. Furthermore, when the solid-state imaging element 200-1 performs AD conversion on the subframe F2, the mode determination section 113 sets a 10-bit mode.

On the other hand, when the solid-state imaging element 200-2 in the sub-camera that is not selected performs the AD conversion on the subframe F1, the mode determination section 113 sets the 10-bit mode. Furthermore, when the solid-state imaging element 200-2 performs AD conversion on the subframe F2, the mode determination section 113 sets an 8-bit mode.

b of the drawing is a diagram illustrating a setting example of the resolution when the sub-camera is selected as the camera corresponding to the frame to be displayed and recorded in the live view mode or the like. In a case where a sub-camera is selected by a user operation, the mode determination section 113 sets a 10-bit mode in a case where the solid-state imaging element 200-1 in the unselected main camera performs AD conversion on the subframe F1. Furthermore, when the solid-state imaging element 200-1 performs AD conversion on the subframe F2, the mode determination section 113 sets an 8-bit mode.

On the other hand, when solid-state imaging element 200-2 in the selected sub-camera performs the AD conversion on subframe F1, the mode determination section 113 sets the 12-bit mode. Furthermore, when the solid-state imaging element 200-2 performs AD conversion on the subframe F2, the mode determination section 113 sets a 10-bit mode.

As exemplified in a and b of the drawing, a resolution higher than that of the unselected frame is set at the time of AD conversion of the selected frame. As described above, by reducing the resolution at the time of AD conversion of the unselected frames, it is possible to reduce the power of the entire imaging device 100 without affecting the image quality.

Note that each of the second, third, fourth, fifth, sixth, seventh, 10th, 11th, and 12th embodiments can be applied to the 13th embodiment.

As described above, according to the 13th embodiment of the present technology, since the mode determination section 113 controls the resolution at the time of AD conversion of the pixel signals of the solid-state imaging elements 200-1 and 200-2 to different values, it is possible to reduce power consumption.

### <14. Application Example to Mobile Body>

The technology according to the present disclosure (the present technology) is applicable to various products. For example, the technology according to the present disclosure may also be implemented as a device mounted on any type of mobile body such as an automobile, an electric vehicle, a hybrid electric vehicle, a motorcycle, a bicycle, a personal mobility, an airplane, a drone, a ship, and a robot.

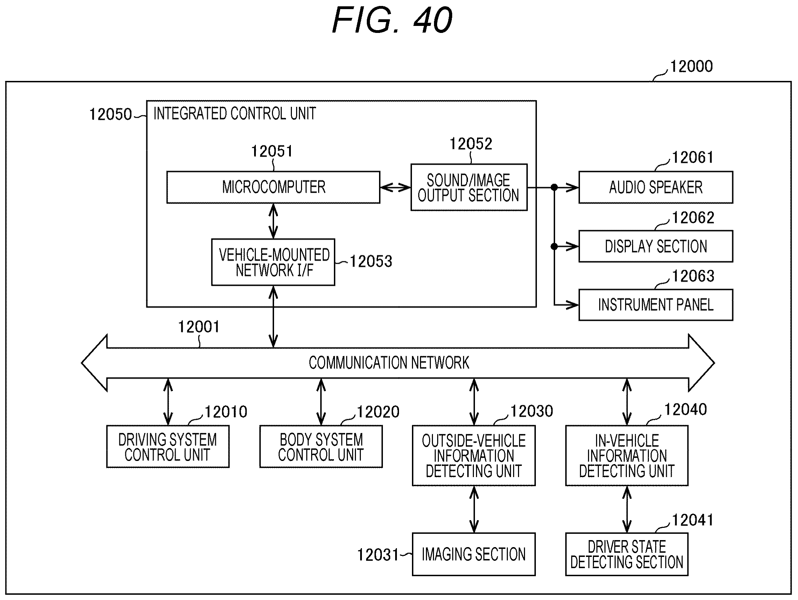

Fig. 40 is a block diagram depicting an example of schematic configuration of a vehicle control system as an example of a mobile body control system to which the technology according to an embodiment of the present disclosure can be applied.

The vehicle control system 12000 includes a plurality of electronic control units connected to each other via a communication network 12001. In the example depicted in Fig. 40, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of Fig. 40, an audio speaker 12061, a display section 12062, and an instrument panel 12063 are illustrated as the output device. The display section 12062 may, for example, include at least one of an on-board display and a head-up display.

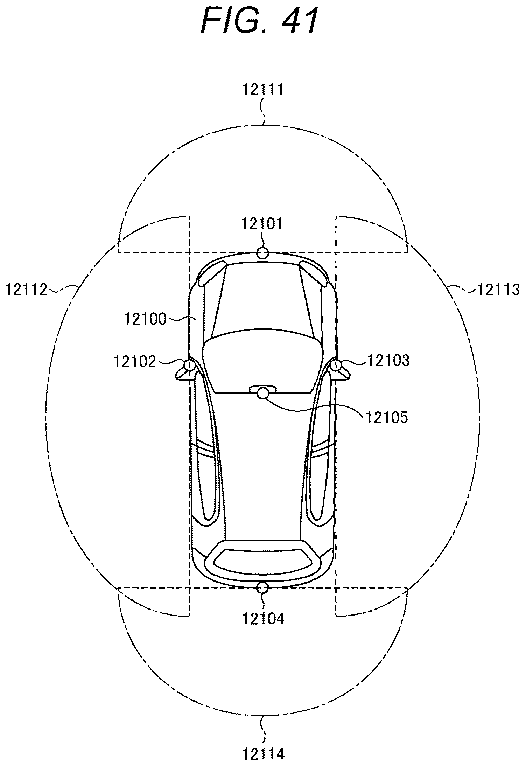

Fig. 41 is a diagram depicting an example of the installation position of the imaging section 12031.

In Fig. 41, the imaging section 12031 includes imaging sections 12101, 12102, 12103, 12104, and 12105.

The imaging sections 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Incidentally, Fig. 41 depicts an example of photographing ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

An example of the vehicle control system to which the technology according to the present disclosure can be applied has been described above. The technology according to the present disclosure can be applied to the imaging section 12031 among the configurations described above. Specifically, the imaging device 100 in Fig. 1 can be applied to the imaging section 12031. By applying the technology according to the present disclosure to the imaging section 12031, it is possible to suppress an increase in circuit scale.

Note that the embodiments described above indicate examples for embodying the present technology, and the respective matters in the embodiments and the respective matters specifying the invention in the claims have correspondence relationships. Similarly, the matters specifying the invention in the claims and matters with the same names in the embodiments of the present technology have correspondence relationships. The present technology, however, is not limited to the embodiments, and can be implemented by making various modifications to the embodiments without departing from the gist of the present technology.

Note that the effect described in the present specification is illustrative only and is not limitative; there may also be another effect.

Note that the present technology may also have the following configurations.
(1) A solid-state imaging element including:
   a pixel that sequentially generates a plurality of analog signals having different exposure times;
   an analog-to-digital converter that sequentially converts each of the plurality of analog signals into a digital signal; and
   a logic circuit that controls resolution of the analog-to-digital converter according to an exposure time.
(2) The solid-state imaging element according to (1), further including
   a compression section that compresses the digital signal, in which
   the logic circuit controls the compression section to compress the digital signal corresponding to at least one analog signal among the plurality of analog signals.
(3) The solid-state imaging element according to (1) or (2), in which
   the logic circuit controls the resolution according to an exposure time in a case where a photometric amount is larger than a predetermined value, and controls the resolution to a predetermined value in a case where the photometric amount is less than the predetermined value.
(4) The solid-state imaging element according to any one of (1) to (3), in which
   the logic circuit controls the resolution according to power consumption of a circuit that processes the digital signal.
(5) The solid-state imaging element according to any one of (1) to (4), further including
   a temperature sensor that measures a temperature, in which
   the logic circuit controls the resolution according to the temperature.
(6) The solid-state imaging element according to any one of (1) to (5), in which
   the pixel includes first and second pixels that share a floating diffusion layer, and
   the logic circuit adds respective analog signals of the first and second pixels.
(7) The solid-state imaging element according to any one of (1) to (6), in which
   the plurality of analog signals includes a long-time exposure signal which is an analog signal having a longest exposure time, a short-time exposure signal which is an analog signal having a shortest exposure time, and an intermediate-time exposure signal which is an analog signal having an exposure time different from the long-time exposure signal and the short-time exposure signal.
(8) The solid-state imaging element according to (7), in which
   the logic circuit controls the pixel to generate the short-time exposure signal in a case where a live view mode for repeatedly generating image data synchronized with a vertical synchronization signal is set, and generates the long-time exposure signal in a case where a still image capturing mode for capturing a still image is set.
(9) The solid-state imaging element according to any one of (1) to (8), in which
   the pixel includes adjacent first and second pixels,
   the plurality of analog signals includes a long-time exposure signal which is an analog signal having a longest exposure time, a short-time exposure signal which is an analog signal having a shortest exposure time, and an intermediate-time exposure signal which is an analog signal having an exposure time different from the long-time exposure signal and the short-time exposure signal, and
   the logic circuit causes the first pixel to sequentially generate the long-time exposure signal and the intermediate-time exposure signal, and causes the second pixel to sequentially generate the intermediate-time exposure signal and the short-time exposure signal.
(10) The solid-state imaging element according to any one of (1) to (9), in which
   the logic circuit controls the resolution when converting an analog signal generated by the solid-state imaging element to a value different from a resolution when converting an analog signal generated by a solid-state imaging element different from the solid-state imaging element.
(11) A solid-state imaging element including:
   a pixel that sequentially generates a plurality of analog signals having different exposure times;
   an analog-to-digital converter that sequentially converts each of the plurality of analog signals into a digital signal in synchronization with a predetermined clock signal; and
   a logic circuit that controls a frequency of the clock signal according to an exposure time.
(12) The solid-state imaging element according to (11), in which
   the logic circuit controls the frequency according to an exposure time in a case where a photometric amount is larger than a predetermined value, and controls the frequency to a predetermined value in a case where the photometric amount is less than the predetermined value.
(13) The solid-state imaging element according to (11) or (12), in which
   the logic circuit controls the frequency according to power consumption of a circuit that processes the digital signal.
(14) The solid-state imaging element according to any one of (11) to (13), further including
   a temperature sensor that measures a temperature, in which
   the logic circuit controls the frequency according to the temperature.
(15) The solid-state imaging element according to any one of (11) to (14), in which
   the pixel includes first and second pixels that share a floating diffusion layer, and
   the logic circuit adds respective analog signals of the first and first pixels.
(16) The solid-state imaging element according to any one of (11) to (15) in which
   the plurality of analog signals includes a long-time exposure signal which is an analog signal having a longest exposure time, a short-time exposure signal which is an analog signal having a shortest exposure time, and an intermediate-time exposure signal which is an analog signal having an exposure time different from the long-time exposure signal and the short-time exposure signal.
(17) The solid-state imaging element according to (16), in which
   the logic circuit controls the pixel to generate the short-time exposure signal in a case where a live view mode for repeatedly generating image data synchronized with a vertical synchronization signal is set, and generates the long-time exposure signal in a case where a still image capturing mode for capturing a still image is set.
(18) The solid-state imaging element according to any one of (11) to (17), in which
   the pixel includes adjacent first and second pixels,
   the plurality of analog signals includes a long-time exposure signal which is an analog signal having a longest exposure time, a short-time exposure signal which is an analog signal having a shortest exposure time, and an intermediate-time exposure signal which is an analog signal having an exposure time different from the long-time exposure signal and the short-time exposure signal, and
   the logic circuit causes the first pixel to sequentially generate the long-time exposure signal and the intermediate-time exposure signal, and causes the second pixel to sequentially generate the intermediate-time exposure signal and the short-time exposure signal.
(19) The solid-state imaging element according to any one of (11) to (18), in which
   the frequency at a time of converting an analog signal generated by the solid-state imaging element is controlled to a value different from a frequency at a time of converting an analog signal generated by a solid-state imaging element outside the solid-state imaging element.
(20) A solid-state imaging element including:
   a plurality of pixels;
   an analog-to-digital converter that sequentially converts a first analog signal generated by a pixel in a region of interest among the plurality of pixels and a second analog signal generated by a pixel in a region not corresponding to the region of interest among the plurality of pixels into digital signals; and
   a logic circuit that controls resolution at a time of converting the first analog signal to a higher value than that at a time of converting the second analog signal.
(21) The solid-state imaging element according to (20), in which
   the plurality of pixels includes first and second pixels that share a floating diffusion layer, and
   the logic circuit adds respective analog signals of the first and second pixels in a case where the first and second pixels are pixels in a region not corresponding to the region of interest.
(22) An imaging device including:
   a pixel that sequentially generates a plurality of analog signals having different exposure times;
   an analog-to-digital converter that sequentially converts each of the plurality of analog signals into a digital signal;
   a logic circuit that controls resolution of the analog-to-digital converter according to an exposure time; and
   an image processing section that processes image data in which the digital signals are arranged.
(23) A control method of a solid-state imaging element, the control method including:
   a generation procedure in which a pixel sequentially generates a plurality of analog signals having different exposure times;
   an analog-to-digital conversion procedure in which an analog-to-digital converter sequentially converts each of the plurality of analog signals into a digital signal; and
   a control procedure in which a logic circuit controls resolution of the analog-to-digital converter according to an exposure time.

### REFERENCE SIGNS LIST

100 Imaging device
110 Application processor
111, 272 Transmission section
112, 112-1, 112-2, 271 Reception section
113 Mode determination section
114 Image processing section
115 Automatic exposure control section
116 Power monitoring section
120 Frame memory
130 Display section
140 Recording section
200, 200-1, 200-2 Solid-state imaging element
210 Vertical scanning section
220 Logic circuit
230 DAC
240 Pixel array section
250, 301, 302, 303, 304 Pixel
251, 251-1, 251-2, 251-3, 251-4 Photoelectric conversion element
252, 252-1, 252-2, 252-3, 252-4 Transfer transistor
253 Reset transistor
254 Floating diffusion layer
255 Amplification transistor
256 Selection transistor
260 Column signal processing section
261 ADC
262 Comparator
263 Counter
264 Latch circuit
280 Compression section
290 Temperature sensor
300 Shared block
12031 Imaging section

## Claims

1. A solid-state imaging element comprising:
a pixel that sequentially generates a plurality of analog signals having different exposure times;
an analog-to-digital converter that sequentially converts each of the plurality of analog signals into a digital signal; and
a logic circuit that controls resolution of the analog-to-digital converter according to an exposure time.

2. The solid-state imaging element according to claim 1, further comprising
a compression section that compresses the digital signal,
wherein
the logic circuit controls the compression section to compress the digital signal corresponding to at least one analog signal among the plurality of analog signals.

3. The solid-state imaging element according to claim 1, wherein
the logic circuit controls the resolution according to an exposure time in a case where a photometric amount is larger than a predetermined value, and controls the resolution to a predetermined value in a case where the photometric amount is less than the predetermined value.

4. The solid-state imaging element according to claim 1, wherein
the logic circuit controls the resolution according to power consumption of a circuit that processes the digital signal.

5. The solid-state imaging element according to claim 1, further comprising
a temperature sensor that measures a temperature, wherein
the logic circuit controls the resolution according to the temperature.

6. The solid-state imaging element according to claim 1, wherein
the pixel includes first and second pixels that share a floating diffusion layer, and
the logic circuit adds respective analog signals of the first and second pixels.

7. The solid-state imaging element according to claim 1, wherein
the plurality of analog signals includes a long-time exposure signal which is an analog signal having a longest exposure time, a short-time exposure signal which is an analog signal having a shortest exposure time, and an intermediate-time exposure signal which is an analog signal having an exposure time different from the long-time exposure signal and the short-time exposure signal.

8. The solid-state imaging element according to claim 7, wherein
the logic circuit controls the pixel to generate the short-time exposure signal in a case where a live view mode for repeatedly generating image data synchronized with a vertical synchronization signal is set, and generates the long-time exposure signal in a case where a still image capturing mode for capturing a still image is set.

9. The solid-state imaging element according to claim 1, wherein
the pixel includes adjacent first and second pixels,
the plurality of analog signals includes a long-time exposure signal which is an analog signal having a longest exposure time, a short-time exposure signal which is an analog signal having a shortest exposure time, and an intermediate-time exposure signal which is an analog signal having an exposure time different from the long-time exposure signal and the short-time exposure signal, and
the logic circuit causes the first pixel to sequentially generate the long-time exposure signal and the intermediate-time exposure signal, and causes the second pixel to sequentially generate the intermediate-time exposure signal and the short-time exposure signal.

10. The solid-state imaging element according to claim 1, wherein
the logic circuit controls the resolution when converting an analog signal generated by the solid-state imaging element to a value different from a resolution when converting an analog signal generated by a solid-state imaging element different from the solid-state imaging element.

11. A solid-state imaging element comprising:
a pixel that sequentially generates a plurality of analog signals having different exposure times;
an analog-to-digital converter that sequentially converts each of the plurality of analog signals into a digital signal in synchronization with a predetermined clock signal; and
a logic circuit that controls a frequency of the clock signal according to an exposure time.

12. The solid-state imaging element according to claim 11, wherein
the logic circuit controls the frequency according to an exposure time in a case where a photometric amount is larger than a predetermined value, and controls the frequency to a predetermined value in a case where the photometric amount is less than the predetermined value.

13. The solid-state imaging element according to claim 11, wherein
the logic circuit controls the frequency according to power consumption of a circuit that processes the digital signal.

14. The solid-state imaging element according to claim 11, further comprising
a temperature sensor that measures a temperature, wherein
the logic circuit controls the frequency according to the temperature.

15. The solid-state imaging element according to claim 11, wherein
the pixel includes first and second pixels that share a floating diffusion layer, and
the logic circuit adds respective analog signals of the first and first pixels.

16. The solid-state imaging element according to claim 11, wherein
the plurality of analog signals includes a long-time exposure signal which is an analog signal having a longest exposure time, a short-time exposure signal which is an analog signal having a shortest exposure time, and an intermediate-time exposure signal which is an analog signal having an exposure time different from the long-time exposure signal and the short-time exposure signal.

17. The solid-state imaging element according to claim 16, wherein
the logic circuit controls the pixel to generate the short-time exposure signal in a case where a live view mode for repeatedly generating image data synchronized with a vertical synchronization signal is set, and generates the long-time exposure signal in a case where a still image capturing mode for capturing a still image is set.

18. The solid-state imaging element according to claim 11, wherein
the pixel includes adjacent first and second pixels,
the plurality of analog signals includes a long-time exposure signal which is an analog signal having a longest exposure time, a short-time exposure signal which is an analog signal having a shortest exposure time, and an intermediate-time exposure signal which is an analog signal having an exposure time different from the long-time exposure signal and the short-time exposure signal, and
the logic circuit causes the first pixel to sequentially generate the long-time exposure signal and the intermediate-time exposure signal, and causes the second pixel to sequentially generate the intermediate-time exposure signal and the short-time exposure signal.

19. The solid-state imaging element according to claim 11, wherein
the frequency at a time of converting an analog signal generated by the solid-state imaging element is controlled to a value different from a frequency at a time of converting an analog signal generated by a solid-state imaging element outside the solid-state imaging element.

20. A solid-state imaging element comprising:
a plurality of pixels;
an analog-to-digital converter that sequentially converts a first analog signal generated by a pixel in a region of interest among the plurality of pixels and a second analog signal generated by a pixel in a region not corresponding to the region of interest among the plurality of pixels into digital signals; and
a logic circuit that controls resolution at a time of converting the first analog signal to a higher value than that at a time of converting the second analog signal.

21. The solid-state imaging element according to claim 20, wherein
the plurality of pixels includes first and second pixels that share a floating diffusion layer, and
the logic circuit adds respective analog signals of the first and second pixels in a case where the first and second pixels are pixels in a region not corresponding to the region of interest.

22. An imaging device comprising:
a pixel that sequentially generates a plurality of analog signals having different exposure times;
an analog-to-digital converter that sequentially converts each of the plurality of analog signals into a digital signal;
a logic circuit that controls resolution of the analog-to-digital converter according to an exposure time; and
an image processing section that processes image data in which the digital signals are arranged.

23. A control method of a solid-state imaging element, the control method comprising:
a generation procedure in which a pixel sequentially generates a plurality of analog signals having different exposure times;
an analog-to-digital conversion procedure in which an analog-to-digital converter sequentially converts each of the plurality of analog signals into a digital signal; and
a control procedure in which a logic circuit controls resolution of the analog-to-digital converter according to an exposure time.
